(19) Europäisches Patentamt / European Patent Office / Office européen des brevets

(11) **EP 4 554 207 A1**

(12) **EUROPEAN PATENT APPLICATION**
published in accordance with Art. 153(4) EPC

(43) Date of publication:
**14.05.2025 Bulletin 2025/20**

(21) Application number: **22950011.1**

(22) Date of filing: **15.09.2022**

(51) International Patent Classification (IPC):
**H04N 19/105** *(2014.01)*    **H04N 19/11** *(2014.01)*

(52) Cooperative Patent Classification (CPC):
**H04N 19/105; H04N 19/11; H04N 19/159**

(86) International application number:
**PCT/CN2022/119139**

(87) International publication number:
**WO 2024/007450 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2022 PCT/CN2022/103946**

(71) Applicant: **GUANGDONG OPPO MOBILE
TELECOMMUNICATIONS
CORP., LTD.
Dongguan, Guangdong 523860 (CN)**

(72) Inventor: **XU, Luhang
Dongguan, Guangdong 523860 (CN)**

(74) Representative: **Taor, Simon Edward William et al
Venner Shipley LLP
200 Aldersgate
London EC1A 4HD (GB)**

(54) **CANDIDATE-LIST CONSTRUCTION METHOD, VIDEO CODING METHOD, APPARATUS AND SYSTEM, AND VIDEO DECODING METHOD, APPARATUS AND SYSTEM**

(57) A construction method and construction apparatus for a multiple reference line intra prediction (MRL_IP) mode candidate list, a video encoding method and apparatus, a video decoding method and apparatus, and a video encoding and decoding system are provided. Prediction on a template region is performed according to each of $N \times M$ combinations of N extended reference lines and M intra prediction modes. According to ascending order of differences between a reconstructed value of the template region and prediction values of the template region, K combinations are filled into the TMRL_IP mode candidate list. An encoding end encodes a TMRL_IP mode flag and an TMRL_IP mode index when the encoding end selects for the current block a combination from the candidate list. In the embodiments of the present disclosure, a combination of an extended reference line and an intra prediction mode is encoded and decoded, which can increase the efficiency of encoding and improves the performance of encoding.

FIG. 6

**Description**

CROSS-REFERENCE TO RELATED APPLICATION(S)

This application claims priority to PCT International Application No. PCT/CN2022/103946, filed July 5, 2022 and entitled "CANDIDATE LIST CONSTRUCTION METHOD, VIDEO CODING AND DECODING METHOD, APPARATUS AND SYSTEM", the entire disclosure of which is hereby incorporated by reference.

TECHNICAL FIELD

The embodiments of the present disclosure relate to but are not limited to video technology, and more specifically, to a construction method and construction apparatus for a multiple reference line intra prediction (MRL_IP) mode candidate list, a video encoding method and apparatus, a video decoding method and apparatus, and a video encoding and encoding system.

BACKGROUND

Digital video compression technology is to mainly compress large digital video data to facilitate transmission and storage and so on. Current universal video encoding and decoding standards, such as H.266 / Versatile Video Coding (VVC), adopt a block-based hybrid coding framework. Each picture in a video is partitioned into equally sized (such as 128 x 128 or 64 x 64) square largest coding units (LCUs). Each LCU may be further partitioned into rectangular coding units (CUs) according to certain rules. Each CU may be partitioned into a prediction unit (PU), a transform unit (TU), and so on. The hybrid coding framework includes modules like a prediction module, a transform module, a quantization module, an entropy coding module, and an in-loop filter. The prediction module includes an intra prediction unit and an inter prediction unit configured to reduce or remove inherent redundancy of a video. Prediction on an intra block is performed by taking neighbouring samples for the block as references, and prediction on an inter block is performed by taking information of neighbouring blocks and reference information from other pictures in space as references. Compared with a prediction signal, residual information is encoded into a bitstream by means of block-based transform, quantization, and entropy coding. These techniques are described in standards and implemented in various fields related to video compression.
With the surge of internet videos and increasing demands for video clarity, despite existing digital video compression standards saving significant amounts of video data, there is still a need to pursue better digital video compression technologies to reduce bandwidth and traffic pressure in digital video transmission.

SUMMARY

The following is a summary of the subject matter described in detail herein. This summary is not intended to limit the scope of the claims.
An embodiment of the present disclosure provides a construction method for a multiple reference line intra prediction (MRL_IP) mode candidate list. The method includes the following. N × M combinations of extended reference lines and intra prediction modes are obtained according to N extended reference lines and M intra prediction modes for a current block, where N ≥ 1, M ≥ 1, and N × M ≥ 2. Prediction on a template region for the current block is performed according to each of the N × M combinations, and differences between a reconstructed value of the template region and prediction values obtained by prediction are calculated. K combinations corresponding to the differences are filled into a template-based MRL_IP (TMRL_IP) mode candidate list for the current block in ascending order of the differences, where 1 ≤ K ≤ N × M.
An embodiment of the present disclosure further provides a video decoding method. The method includes the following. Whether an MRL_IP mode is used for a current block is determined by decoding an MRL_IP mode flag for the current block. When the MRL_IP mode is determined to be used for the current block, an MRL_IP mode index for the current block is further decoded, and an MRL_IP most candidate list for the current block is constructed, where the candidate list is filled with combinations of candidate extended reference lines and candidate intra prediction modes for the current block. According to the candidate list and the MRL_IP mode index, a combination of an extended reference line and an intra prediction mode selected for the current block is determined, and prediction on a current picture is performed according to the selected combination. The MRL_IP mode index indicates the position of the selected combination of an extended reference line and an intra prediction mode in the candidate list.
An embodiment of the present disclosure further provides a video encoding method. The method includes the following. An MRL_IP most candidate list is constructed for a current block, where the candidate list is filled with combinations of candidate extended reference lines and candidate intra prediction modes for the current block. A combination of a reference line and an intra prediction mode for the current block for intra prediction is selected through rate-distortion optimization. When an encoding condition for an MRL_IP mode for the current block is satisfied, an MRL_IP mode flag for the current block is encoded to indicate that the MRL_IP mode is used for the current block, and an MRL_IP mode index for the current block is encoded to indicate the position of the selected combination in the candidate list. The encoding condition at least includes that: the selected combination is in the candidate list.

An embodiment of the present disclosure further provides a bitstream. The bitstream includes block-level syntax elements for intra prediction, and the syntax elements include an MRL_IP mode flag and an MRL_IP mode index for the current block, where the MRL_IP mode flag indicates whether an MRL_IP mode is used for the current block, and the MRL_IP mode index indicates the position of a combination of an extended reference line and an intra prediction mode selected for the current block in an MRL_IP mode candidate list.

An embodiment of the present disclosure further provides a construction apparatus for an MRL_IP mode candidate list. The apparatus includes a processor and a memory storing a computer program, where the processor, when executing the computer program, can implement the method for constructing an MRL_IP mode candidate list as described in any embodiment of the present disclosure .

An embodiment of the present disclosure further provides a video decoding apparatus. The apparatus includes a processor and a memory storing a computer program, where the processor, when executing the computer program, can implement the video decoding method as described in any embodiment of the present disclosure.

An embodiment of the present disclosure further provides a video encoding apparatus. The apparatus includes a processor and a memory storing a computer program. The processor, when executing the computer program, can implement the video encoding method as described in any embodiment of the present disclosure.

An embodiment of the present disclosure further provides a video encoding and decoding system, which includes the video encoding apparatus described in any embodiment of the present disclosure and the video decoding apparatus described in any embodiment of the present disclosure.

An embodiment of the present disclosure further provides a non- transitory computer-readable storage medium. The computer-readable storage medium stores a computer program, where the computer program, when executed by a processor, implements the construction method for an MRL_IP mode candidate list as described in any embodiment of the present disclosure, or implements the video decoding method as described in any embodiment of the present disclosure, or implements the video encoding method as described in any embodiment of the present disclosure.

Other aspects will be apparent upon reading and understanding the drawings and detailed description.

BRIEF DESCRIPTION OF THE DRAWINGS

The accompanying drawings are intended to aid in understanding the embodiments of the present disclosure and form part of the specification. Together with the embodiments of the present disclosure, the accompanying drawings are used to explain the technical solutions of the present disclosure and do not constitute a limitation to the technical solutions of the present disclosure.

FIG. 1A is a schematic diagram of an encoding and decoding system according to an embodiment of the present disclosure.

FIG. 1B is a framework diagram of an encoding end according to an embodiment of the present disclosure.

FIG. 1C is a framework diagram of a decoding end according to an embodiment of the present disclosure.

FIG. 2 is a schematic diagram illustrating intra prediction modes according to an embodiment of the present disclosure.

FIG. 3 is a schematic diagram illustrating neighbouring intra prediction blocks for a current block according to an embodiment of the present disclosure.

FIG. 4 is a schematic diagram illustrating a template and a reference template region for a current block according to an embodiment of the present disclosure.

FIG. 5 is a schematic diagram illustrating multiple reference lines (MRLs) around a current block according to an embodiment of the present disclosure.

FIG. 6 is a flow chart of a video encoding method according to an embodiment of the present disclosure.

FIG. 7 a flow chart of a construction method for an MRL intra prediction (MRL_IP) mode candidate list according to an embodiment of the present disclosure.

FIG. 8A is a schematic diagram illustrating a template region and extended reference lines around a current block according to an embodiment of the present disclosure.

FIG. 8B is a schematic diagram illustrating a template region and extended reference lines around a current block according to another embodiment of the present disclosure.

FIG. 9 is a flow chart of a video decoding method according to an embodiment of the present disclosure.

FIG. 10 is schematic diagram of a construction apparatus for an MRL_IP mode candidate list according to an embodiment of the present disclosure.

DETAILED DESCRIPTION

The present disclosure illustrates multiple embodiments, but the illustration is exemplary rather than restrictive, and it is obvious to those skilled in the art that there may be more embodiments and implementations within the scope of the embodiments described in the present disclosure.

In the illustration of the present disclosure, terms such as "exemplary" or "for example" are used to indicate examples, illustrations, or explanations. Any embodiment described as "exemplary" or "for example" in the present disclosure should not be interpreted as being more preferred or advantageous than other embodiments. "And/or" in the text is an illustration of an association relationship of associated objects, indicating that three relationships may exist. For example, A and/or B can represent: A exists alone, A and B exist at the same time, and B exists alone. "Multiple" or "a plurality of" means two or more than two. In addition, in order to facilitate clear illustration of the technical solutions of the embodiments of the present disclosure, terms such as "first" and "second" are used to distinguish between identical or similar items with substantially the same functions and effects. Those skilled in the art can understand that the terms such as "first" and "second" do not limit the quantity and execution order, and the terms such as "first" and "second" do not limit them to be necessarily different.

When describing representative exemplary embodiments, the specification may have presented the method and/or process as a specific sequence of steps. However, to the extent that the method or process does not rely on the specific order of steps described herein, the method or process should not be limited to the steps of the specific order described. As will be understood by those of ordinary skill in the art, other sequences of steps are also possible. Therefore, the specific sequence of steps set forth in the specification should not be interpreted as a limitation to the claims. In addition, the claims for the method and/or process should not be limited to the steps of performing them in the order written, and those of ordinary skill in the art can easily understand that these sequences can be changed and these changes still remain within the spirit and scope of the embodiments of the present disclosure.

A local illumination compensation method, a video encoding method, and a video decoding method proposed in the embodiments of the present disclosure can be applied to various video encoding and decoding standards, such as H.264 / Advanced Video Coding (AVC), H.265 / High Efficiency Video Coding (HEVC), H.266 / Versatile Video Coding (VVC), AVS (Audio Video Coding Standard), and other standards developed by Moving Picture Experts Group (MPEC), Alliance for Open Media (AOM), Joint Video Experts Team (JVET) and extensions of these standards, or any other customized standards.

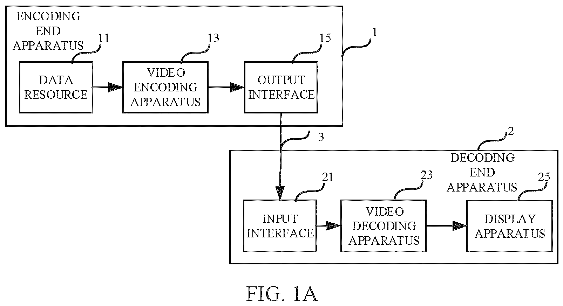

FIG. 1A is a block diagram of a video encoding and decoding system that can be used in the embodiments of the present disclosure. As illustrated in the figure, the system is divided into an encoding end apparatus 1 and a decoding end apparatus 2. The encoding end apparatus 1 is configured to generate a bitstream. The decoding end apparatus 2 can decode the bitstream. The decoding end apparatus 2 can receive the bitstream from the encoding end apparatus 1 via a link 3. The link 3 includes one or more media or devices that can transfer the bitstream from the encoding end apparatus 1 to the decoding end apparatus 2. In one example, the link 3 includes one or more communication media that enable the encoding end apparatus 1 to send the bitstream directly to the decoding end apparatus 2. The encoding end apparatus 1 modulates the bitstream according to a communication standard (such as a wireless communication protocol) and sends the modulated bitstream to the decoding end apparatus 2. The one or more communication media may include wireless and/or wired communication media, and may form part of a packet network. In another example, the bitstream can also be output from an output interface 15 to a storage device, and the decoding end apparatus 2 can read stored data from the storage device via streaming or downloading.

As illustrated in the figure, the encoding end apparatus 1 includes a data source 11, a video encoding apparatus 13, and the output interface 15. The data source 11 includes a video capturing apparatus (such as a camera), an archive containing previously captured data, a feed interface for receiving data from a content provider, a computer graphics system for generating data, or a combination of these sources. The video encoding apparatus 13 encodes data from the data source 11 and outputs encoded data to the output interface 15. The output interface 15 may include at least one of a regulator, a modem, or a transmitter. The decoding end apparatus 2 includes an input interface 21, a video decoding apparatus 23, and a display apparatus 25. The input interface 21 includes at least one of a receiver or a modem. The input interface 21 can receive a bitstream via the link 3 or from the storage device. The video decoding apparatus 23 decodes the received bitstream. The display apparatus 25 is configured to display decoded data. The display apparatus 25 can be integrated with other devices of the decoding end apparatus 2 or arranged separately. The display apparatus 25 is optional for the decoding end. In other examples, the decoding end may include other devices or equipment for the decoded data.

Based on the video encoding and decoding system as illustrated in FIG. 1A, various video encoding and decoding methods may be used to implement video compression and decompression.

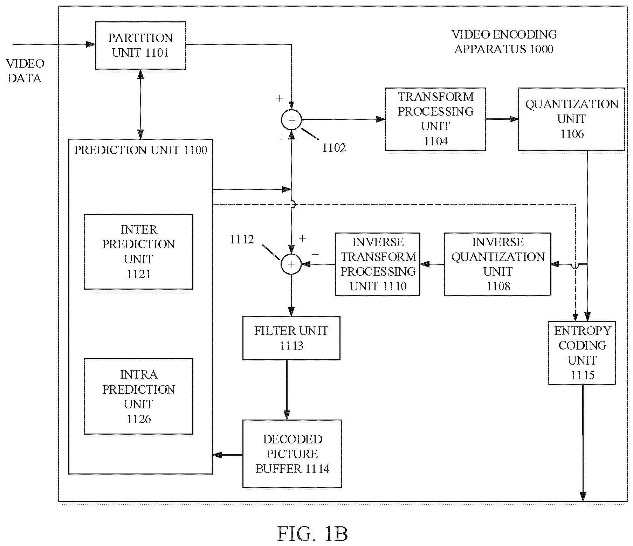

FIG. 1B is a block diagram of an exemplary video encoding apparatus that can be used in the embodiments of the present disclosure. As illustrated in the figure, the video encoding apparatus 1000 includes a prediction unit 1100, a partition unit 1101, a residual generation unit 1102 (indicated by a circle with a plus sign after the partition unit 1101 in the figure), a transform processing unit 1104, a quantization unit 1106, an inverse quantization unit 1108, an inverse transform processing unit 1110, a reconstruction unit 1112 (indicated by a circle with a plus sign after the inverse transform processing unit 1110 in the figure), a filter unit 1113, a decoded picture buffer 1114, and an entropy coding unit 1115. The prediction unit 1100 includes an inter prediction unit 1121 and an intra prediction unit 1126. The decoded picture buffer 1114 may also be called a picture buffer of decoded images, a buffer of being decoded pictures, a buffer of decoded pictures, etc. The video encoder 20 may also include more, less, or different functional components than the example, such as the transform processing unit 1104, the inverse transform processing unit 1110, etc. can be omitted in some cases.

The partition unit 1101 cooperates with the prediction unit 1100 to partition received video data into slices, coding tree units (CTUs), or other relatively large units. The video data received by the partition unit 1101 may be a video sequence including video frames such as I-frames, P-frames, or B-frames.

The prediction unit 1100 can partition the CTU into coding units (CUs), and perform intra prediction encoding or inter prediction coding on the CU. For performing intra prediction and inter prediction on the CU, the CU can be partitioned into one or more prediction units (PUs).

The inter prediction unit 1121 can perform inter prediction on the PU and generate prediction data for the PU. The prediction data includes a prediction block for the PU, motion information for the PU, and various syntax elements for the PU. The inter prediction unit 1121 may include a motion estimation (ME) unit and a motion compensation (MC) unit. The motion estimation unit can be configured for motion estimation to generate a motion vector. The motion compensation unit can be configured to obtain or generate a prediction block according to the motion vector.

The intra prediction unit 1126 may perform intra prediction on the PU and generate prediction data for the PU. The prediction data for the PU may include a prediction block and various syntax elements for the PU.

The residual generation unit 1102 may generate a residual block for the CU by subtracting, from the original block for the CU, the prediction blocks for the PUs into which the CU is partitioned.

The transform processing unit 1104 can partition the CU into one or more transform units (TUs), and the partition for the prediction unit and the partition for the transform unit may be different. A residual block associated with the TU is a sub-block obtained by partitioning the residual block of the CU. A coefficient block associated with the TU is generated by applying one or more transforms to the residual block associated with the TU.

The quantization unit 1106 can quantize a coefficient(s) in a coefficient block based on a selected quantization parameter(s) (QP(s)). The quantization degree of the coefficient block can be adjusted by adjusting the QP(s).

The inverse quantization unit 1108 and the inverse transform processing unit 1110 can apply inverse quantization and inverse transform to the coefficient block, respectively, to obtain a reconstructed residual block associated with the TU.

The reconstruction unit 1112 can add the reconstructed residual block and the prediction block generated by the prediction unit 1100 to generate a reconstructed picture.

The filter unit 1113 is configured to perform in loop filtering on the reconstructed picture, and store the filtered reconstructed picture in the decoded picture buffer 1114 as a reference picture. The intra prediction unit 1126 can extract a reference picture for a neighbouring block for the PU from the decoded picture buffer 1114 to perform intra prediction. The inter prediction unit 1121 can use a pervious reference picture buffered in the decoded picture buffer 1114 to perform inter prediction on the PU of the current picture.

The entropy coding unit 1115 can perform entropy coding on received data (e.g., syntax elements, quantized coefficient blocks, motion information, etc.).

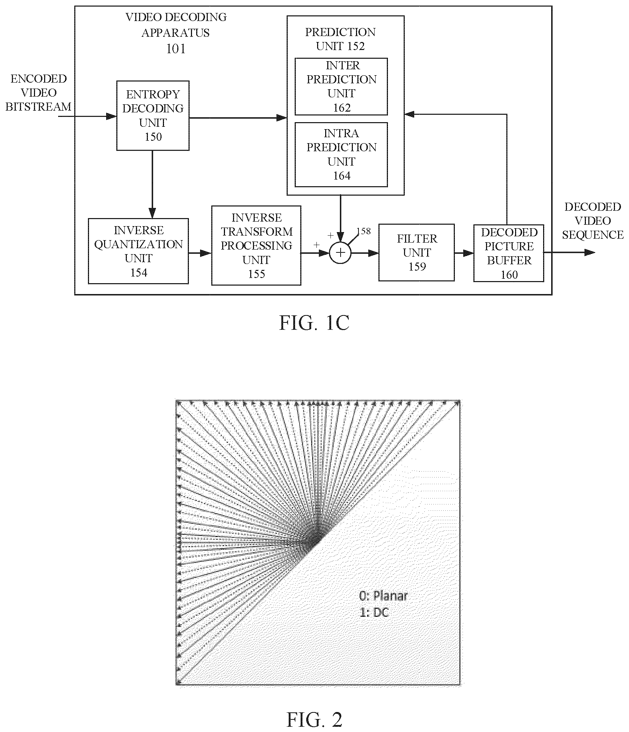

FIG. 1C is a block diagram of an exemplary video decoding apparatus that can be used in the embodiments of the present disclosure. As illustrated in the figure, the video decoding apparatus 101 includes an entropy decoding unit 150, a prediction unit 152, an inverse quantization unit 154, an inverse transform processing unit 156, a reconstruction unit 158 (indicated by a circle with a plus sign after the inverse transform processing unit 155 in the figure), a filter unit 159, and a decoded picture buffer 160. In other embodiments, the video decoder 30 may include more, fewer or different functional components, such as the inverse transform processing unit 155 may be omitted in some cases .

The entropy decoding unit 150 can perform entropy decoding on received bitstream, and extract syntax elements, quantized coefficient blocks, motion information for the PU, etc. The prediction unit 152, the inverse quantization unit 154, the inverse transform processing unit 156, the reconstruction unit 158, and the filter unit 159 can all perform corresponding operations based on the syntax elements extracted from the bitstream.

The inverse quantization unit 154 can perform inverse quantization on a coefficient block associated with a quantized TU.

The inverse transform processing unit 156 can apply one or more inverse transforms to an inverse quantized coefficient block to generate a reconstructed residual block for the TU.

The prediction unit 152 includes an inter prediction unit 162 and an intra prediction unit 164. If the PU is encoded using intra prediction, the intra prediction unit 164 can determine an intra prediction mode for the PU based on syntax elements decoded from the bitstream, perform intra prediction according to the determined intra prediction mode and reconstructed reference information adjacent to the PU obtained from the decoded picture buffer 160 to generate a prediction block for the PU. If the PU is encoded using inter prediction, the inter prediction unit 162 can determine one or more reference blocks for the PU based on motion information for the PU and corresponding syntax elements for the PU, and generate a prediction block for the PU based on the reference block(s) obtained from the decoded picture buffer 160.

The reconstruction unit 158 can obtain a reconstructed picture based on the reconstructed residual block associated with the TU and the prediction block for the PU generated by the prediction unit 152.

The filter unit 159 can perform in loop filtering on the reconstructed picture, and the filtered reconstructed picture is stored in the decoded picture buffer 160. The decoded picture buffer 160 can provide a reference image for subsequent motion compensation, intra prediction, inter prediction, etc., and can also output the filtered reconstructed picture as decoded video data for presentation on the display apparatus.

Based on the above-mentioned video encoding apparatus and video decoding apparatus, the following basic encoding and decoding processes can be performed. At the encoding end, a picture is partitioned into blocks, intra prediction or inter prediction or other algorithms are performed on the current block to generate a prediction block for the current block, the prediction block is subtracted from the original block for the current block to obtain a residual block, the residual block is transformed and quantized to obtain a quantization coefficient, and entropy coding is performed on the quantization coefficient to generate a bitstream. At the decoding end, intra prediction or inter prediction is performed on the current block to generate a prediction block for the current block, and on the other hand, the quantization coefficient obtained by decoding the bitstream is inversely quantized and inversely transformed to obtain the residual block, the prediction block and the residual block are added to obtain a reconstructed block, the reconstructed block constitutes a reconstructed picture, and in loop filtering is performed on the reconstructed picture based on the picture or block to obtain a decoded picture. The encoding end also obtains a decoded picture through operations similar to those of the decoding end, and the decoded picture obtained by the encoding end is usually also called a reconstructed picture. The decoded picture can be used as a reference picture for inter prediction for subsequent pictures. Information determined by the encoding end, such as block partition information, mode information and parameter information such as prediction, transformation, quantization, entropy coding, in loop filtering, etc. can be written into the bitstream if necessary. The decoding end determines the same block partition information, the mode information and parameter information such as prediction, transformation, quantization, entropy coding, in loop filtering, etc. as the encoding end by decoding the bitstream or analyzing existing information, thereby ensuring that the decoded picture obtained by the encoding end is the same as the decoded picture obtained by the decoding end.

Although the above is an example of a block-based hybrid coding framework, the embodiments of the present disclosure are not limited thereto. With the development of technology, one or more modules in the framework and one or more steps in the process may be replaced or optimized.

In the text, the current block may be a block-level coding unit such as a current CU or a current PU in the current picture.

When the encoding end performs intra prediction, the encoding end usually performs prediction on the current block using various angular modes and non-angular modes to obtain a prediction block; selects an optimal intra prediction mode for the current block according to rate-distortion information calculated based on the prediction block and the original block, and encodes the intra prediction mode and transmit the encoded intra prediction mode to the decoding code via the bitstream. The decoding end obtains, through decoding, the intra prediction mode selected for the current block, and performs intra prediction on the current block according to the intra prediction mode. After the development of successive generations of digital video encoding and decoding standards, non-angular modes remain relatively stable, including a direct current mode (i.e., DC mode) and a planar mode. Angular modes continue to increase with the evolution of digital video encoding and decoding standards. Taking H series of international digital video coding standards as an example, the H.264/AVC standard includes only 8 traditional angular prediction modes and 1 traditional non-angular prediction mode; in H.265/HEVC prediction modes are extended to include 33 traditional angular prediction modes and 2 traditional non-angular prediction modes. In H.266/VVC, the traditional intra prediction modes, i.e., the planar mode and DC mode, and 65 angular modes are included, as illustrated in FIG. 2. The DC mode is suitable for large flat regions, and a prediction value for the DC mode is obtained by calculating an average value of left reference samples and/or upper reference samples. The planar mode is suitable for pixel gradients, that is, for a region where pixel values change slowly.

If the intra prediction mode for the current block is directly encoded, 7 bits are required to encode 67 modes, and thus the amount of data is very large. According to statistical characteristics, it is easy to select the same intra prediction mode for the current block and a sample region close to the current block. Based on this characteristic, the most probable mode (MPM) technology is adopted in HEVC, VVC, and the enhanced compression model (ECM). The ECM is a reference software based on a VTM - 10.0 - based reference software and integrated with various new tools to further explore performance of encoding and decoding.

For MPM, an MPM list is first constructed, and the MPM list is filled with 6 intra prediction modes that are most likely to be selected for the current block. If an intra prediction mode selected for the current block is in the MPM list, only an index of the intra prediction mode needs to be encoded (only 3 bits are needed). If the intra prediction mode selected for the current block is not in the MPM list but in 61 non-MPMs, the intra prediction mode is encoded using truncated binary code (TBC) coding in the stage of entropy coding.

In VVC, regardless of whether multiple reference line (MRL) and intra sub-partitions (ISP) are applied, the MPM list includes 6 prediction modes. MPMs in ECM are classified into MPMs and secondary MPMs, where the MPM list has a length of 6, and a secondary MPM list has a length of 16. Among the 6 modes in the MPM list, the planar mode is always filled in the first position in the MPM list, and the remaining 5 positions are filled through the following three steps in sequence until all 5 positions are filled. Extra modes will be automatically taken as secondary MPMs.

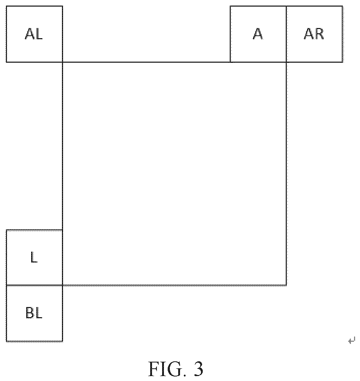

In step 1, intra prediction modes used for prediction blocks at 5 neighbouring positions around the current block are filled in sequence. As illustrated in FIG. 3, the 5 positions include upper left (AL), upper (A), upper right (AR), left (L), and bottom left (BL) positions of the current block in sequence.

In step 2, a mode derived based on reconstructed samples around the current block and a gradient histogram is filled.

In step 3, an angular mode that is close in angle to the angular mode selected in step 1 is filled.

The secondary MPM list may consist of some main angular modes except the intra prediction modes in the MPMs.

Since an MPM flag (mpm_flag) is encoded and decoded after an MRL mode, the encoding and decoding of the MPM in the ECM depends on an MRL flag. When the MRL mode is not used for the current block, the MPM flag needs to be decoded to determine whether the MPM is used for the current block. When the MRL mode is used for the current block, there is no need to decode the MPM flag, and the MPM is used for the current block by default.

The following table is an example of MPM-related syntax elements:

| ... ... | Descriptor |
|---|---|
| if(! mrl_flag) { | Not using an MRL mode means not using extended reference lines? |
|    **mpm_flag** | If true, decode the MPM flag |
| } | |
| else { | Use extended reference lines |
|   mpm_flag = 1 | The initial MPM flag is 1, which means the MPM is used by default. |
| } | |
| if(mpm_flag){ | |
|   mpm_idx = 0 | |
| if (multiRefIdx == 0) { | |
|     mpm_idx = **decodeBin()** | Decode a context model - based bin |
| } | |
| else { | |
|   mpm_idx = 1 | |
| } | |
| if(mpm_idx > 0){ | |
|    mpm_idx += **decodeBin()** | Decode a context model - based bin |
| if(mpm_idx > 1) | |
|     mpm_idx += **decodeEPBin()** | Decode an equally probable bin |
| if(mpm_idx > 2) | |
|      mpm_idx += **decodeEPBin()** | Decode an equally probable bin |
|      if(mpm_idx > 3) | |
|       mpm_idx += **decodeEPBin()** | Decode an equally probable bin |
|    } | |
| } | |
| ... ... | Decode a mode not belonging to MPMs |

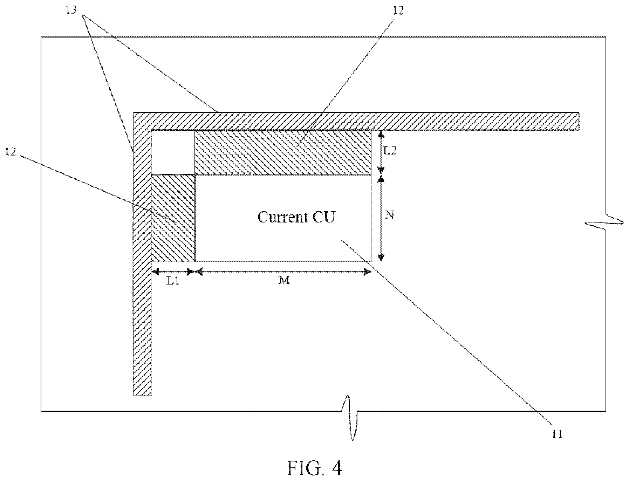

Template based intra mode derivation (TIMD) is an intra prediction mode for luma pictures. The TIMD mode is generated based on a candidate intra prediction mode in the MPM list and a template region ("template" for short). In the ECM, as illustrated in FIG. 4, a left neighbouring region and an upper neighbouring region for the current block (such as the current CU) 11 constitute a template region 12 for the current block. The left neighbouring region is called a left template region (referred to as a left template), and the upper neighbouring region is called an upper template region (referred to as an upper template).

A reference template region 13 is located at outside (referring to left and upper sides) of the template region 12, and exemplary sizes and positions of each region are illustrated in the figure. In one example, the width L1 of the left template and the height L2 of the upper template are both 4. The reference template region 13 may be a row adjacent to the upper side of the template region or a column adjacent to the left side of the template region.

For TIMD, it is assumed that the distribution characteristics of the current block and the template region for the current block are consistent, and by taking a reconstructed value of the reference template region as a reconstructed value of a reference line, all intra prediction modes in MPMs and secondary MPMs are traversed to predict the template region and obtain a prediction result. Then the difference between the reconstructed value of the template region and the prediction result for each mode is calculated and expressed as the sum of absolute transformed differences (SATD). The intra prediction mode with the lowest SATD is selected as the optimal intra prediction mode and used as the TIMD mode for the current block. The decoding end can derive the TIMD mode in the same way. If TIMD is allowed for a sequence, a flag is needed to indicate whether TIMD is used for each current block. If the intra prediction mode selected for the current block is the TIMD mode, prediction on the current block is performed using the TIMD mode, and decoding of remaining syntax elements related to intra prediction, such as ISP and MPM, can be skipped, thereby greatly reducing bits for encoding a mode.

After the SATD between the reconstructed value of the template region and the prediction result for each mode (the prediction value of the template region) is calculated, the final TIMD mode to be used can be determined according to the following manner.

Assuming that mode1 and mode2 are two angular modes for intra prediction in MPMs, mode1 is the angular mode with the lowest SATD which is expressed as *cost*1, and mode2 is the angular mode with the second lowest SATD which is expressed as *cost2,* when cost1 $\times$ 2 $\leq$ cost2, mode1 is used as the TIMD mode for the current block, and when cost1 $\times$ 2 > cost2, a prediction mode for weighting prediction results for mode 1 and mode 2 is used as the TMID mode for the current block, also known as a TIMD fusion mode.

The weighting manner and weighting factors are illustrated in the following formula:

$$Pred = Pred_{mode1} \times w1 + Pred_{mod} \times w2$$

$$w1 = \frac{cost2}{cost1 + cost2}, \qquad w2 = \frac{cost1}{cost1 + cost2}$$

*Pred* is the prediction result of the current block using the TIMD fusion mode, $Pred_{mod}$ is the prediction result of the current block using mode1, $Pred_{mod}$ is the prediction result of the current block using mode2, and *w1* and *w2* are weighting factors calculated according to *cost1* and *cost2.*

In HEVC, intra prediction is performed by taking the upper row and left column closest to the current block as references. If differences between reconstructed values and original sample values of this row and column are relatively large, the quality of prediction of the current block may also be greatly affected. To solve this problem, VVC adopts the MRL intra prediction technology. In VVC, in addition to the nearest reference sample, that is, in addition to a reference line with an index of 0 (reference line0), a reference line with an index of 1 (reference line1) and a reference line with an index of 2 (reference line2) can also be used as extended reference lines for intra prediction. To reduce complexity of encoding, MRL is only used for a non-planar mode in MPMs. When the encoding end performs prediction using each angular mode, the encoding end needs to try all the three reference lines, and through rate-distortion optimization, selects a reference line with the lowest rate-distortion cost (RD cost) for the current block. An index of the selected reference line is encoded and transmitted to the decoding end. The decoding end obtains the index of the reference line through decoding, and then determines the reference line selected for the current block based on the index of the reference line, to perform prediction on the current block.

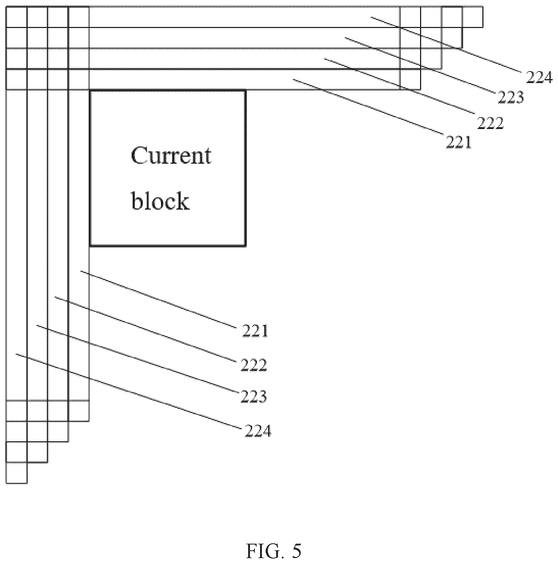

In an example as illustrated in FIG. 5, 4 reference lines for the current block are illustrated, including reference line0 221 adjacent to the current block, i.e., a reference line with an index of 0, reference line1 222 with an interval of 1 line from the current block, i.e., a reference line with an index of 1, reference line2 223 with an interval of 2 lines from the current block, i.e., a reference line with an index of 2, and reference line3 224 with an interval of 3 lines from the current block, i.e., a reference line with an index of 3. There may be more reference lines for the current block, i.e., there may be a reference line with an index greater than 4. Only reconstructed values of some of the reference lines may be used for prediction. In the text, the indexes of reference lines are numbered as illustrated in FIG. 5.

In the text, a reference line is called a "line" for the convenience of expression. A reference line actually includes a row and a column. Generally, the reconstructed value of a reference line used for prediction also includes reconstructed values of a row and a column, which is the same as the usual description method in the industry.

In one example, the template region for the current block is in the reference line with an index of 0, then the reference line with an index of 0 is referred to as a reference line where the template region is located, and the reference lines with indexes of 1 to 3 are referred to as reference lines outside the template region. If the template region for the current block is in the reference lines with indexes of 0 and 1, then the reference lines with indexes of 0 and 1 are referred to as reference lines where the template region is located, and the reference lines with indexes of 2 and 3 are referred to as reference lines outside the template region. In the text, the reference lines for the current block include the reference line with an index of 0 and the reference lines with indexes greater than 0, and the reference lines with indexes greater than 0 are referred to as extended reference lines. In the case where the reference line where the template region is located is the reference line with an index of 0, all extended reference lines are outside the template region. In the case where the template region is located in multiple reference lines, the reference lines where the template region is located include an extended reference line(s).

In the ECM, the decoding manner related to MRL is illustrated in Table 1 and Table 2. Table 1 is used when TIMD is not used for the current block, and Table 2 is used when TIMD is used for the current block.

Table 1

| | |
|---|---|
| ... ... | |
| if( !sps_mrl_flag<br>    \|\| cu.timd<br>    \|\| cu.dimd<br>    \|\| isFirstLineOfCtu<br>    \|\| cu.bdpcmMode<br>    \|\| !cu.Y().valid){ | If a sps flag indicates that mrl is not allowed<br><br>Or timd is selected for the current CU<br>Or dimd is selected for the current CU<br>Or the current CU is located in the first line of the CTU<br>Or bdpcm is selected for the current CU<br>Or the current CU does not contain a luma component |
| multiRefIdx = 0 | Do not use mrl |
| } | |
| else { | Otherwise (use mrl): |
| idx += decodeBin() | Decode a context model-based bin |
| if(idx > 0) | |
| idx += decodeBin() | Decode a context model-based bin |
| if(idx > 1) | |
| idx += **decodeBin()** | Decode a context model-based bin |
| if(idx > 2) | |
| idx += **decodeBin()** | Decode a context model-based bin |
| if(idx > 3) | |
| idx += **decodeBin()** | Decode a context model-based bin |
| if(idx > 4) | |
| idx += **decodeBin()** | Decode a context model-based bin |
| multiRefIdx = MULTI_REF_LINE_IDX[idx] | Get multiRefIdx |
| } | |

The MRL index can be encoded using context model-based truncated unary code coding, and after encoding, multiple context model-based bins are obtained. The bin can also be called a binary flag, a binary symbol, a binary bit, etc.

In the ECM, for the MRL mode, more reference lines can be used. In order to encode the reference line selected for the current block, indexes of multiple candidate reference lines are filled into a list. In the text, the list is called a multiple reference line index list, abbreviated as MRL index list, but the list can also be called an MRL list, a candidate reference line list, a reference line index list, etc. When TIMD is not used for the current block, the length of the MRL index list is 6, that is, there are 6 positions in total, which can be filled with indexes of 6 reference lines. The indexes of 6 reference lines and their order are fixed, which are 0, 1, 3, 5, 7, 12, respectively, and can be expressed as follows: MULTI_REF_LINE_IDX [6] = {0, 1, 3, 5, 7, 12}. In the MRL index list, the first position is filled with an index of 0, which is the index of the reference line closest to the current block. The second to sixth positions are filled with indexes of 1, 3, 5, 7, and 12, which are the indexes of 5 extended reference lines arranged in ascending order of distances from the current block to the extended reference lines.

When the reference line selected for the current block is in the MRL index list, multiRefIdx is used to indicate the position of the reference line selected for the current block in the MRL index list, and the selected reference line can be indicated by encoding multiRefIdx. The MRL index list {0, 1, 3, 5, 7, 12} is taken as an example, where the indexes at the first to sixth positions are 0 to 5, respectively. Assuming that the reference line with an index of 0 is selected for the current block, since the reference line with an index of 0 is at the first position in the MRL index list, multiRefIdx is 0. Assuming that the reference line with an index of 7 is selected for the current block, since the reference line with an index of 7 is at the fifth position in the MRL index list, multiRefIdx is 4, and so on for other cases.

multiRefIdx can be encoded using context model-based truncated unary code coding or the like. The smaller the value of multiRefIdx, the shorter the code length and the faster the decoding.

The MRL mode can also be used together with the TIMD mode. When TIMD is used, the length of the MRL index list is 3, which means that the MRL index list can be filled with indexes of 3 reference lines and the order of the indexes in the MRL index list is fixed, expressed as MULTI_REF_LINE_IDX [3] = {0, 1, 3}. Corresponding encoding and decoding manners for MRL are illustrated in Table 2:

| ... ... | |
|---|---|
| if( (!sps_mrl_flag<br>  &#124;&#124; cu.dimd<br>  &#124;&#124; isFirstLineOfCtu<br>  &#124;&#124; cu.bdpcmMode<br>  &#124;&#124; !cu.Y().valid)){ | If a sps flag indicates that mrl is not allowed<br>Or dimd is selected for the current CU<br>Or the current CU is located in the first line of the CTU<br><br>Or bdpcm is selected for the current CU<br>Or the current CU does not contain a luma component |
| multiRefIdx = 0 | Do not use mrl for timd mode |
| } | |
| else if(cu.timd){ | If timd is selected for the current CU |
|   idx += **decodeBin()** | Decode a context model-based bin |
|   if(idx > 0) | |
|     idx += **decodeBin()** | Decode a context model-based bin |
|   multiRefIdx = MULTI_REF_LINE_IDX[idx] | Get multiRefIdx |
| } | |

For ease of understanding, in the above, a table for a case where MRL is used for TIMD and a table a case where MRL is not used for TIMD are illustrated for example, but the two tables can also be combined into one table.

In different standards, such as MPM, the technology of deriving an MPM list using neighbouring blocks for the current block may have different names, for example, called adaptive intra mode coding (AIMC) in AV2 (AVM), and called, in AVS3, frequency-based intra mode coding (FIMC) in the case of screen content coding. In the case of non-screen content coding, technologies similar to MPM are always used. Such as MRL, the technology of using MRL for intra prediction is called multiple reference line selection (MRLS) for intra prediction in AV2 (AVM). But this is just a difference in name. In the case where the terms such as MPM and MRL are used in the embodiment, the technologies essentially the same in other standards should also be covered.

In the ECM, when the selected mode is not TIMD, the use of MRL technology is bounded with the use of the non-planar mode in MPMs. At most 5 extended reference lines and 5 intra prediction modes in MPMs are combined, for a total of 25 combinations. For these 25 combinations, at most 3 equally probable bins (syntax elements for MPM) and 6 context model-based bins (1 bin is for syntax elements for MPM, and 5 bins are for syntax elements for MRL), and thus a total of 9 bins are required, which results in a relatively high cost for encoding and decoding.

If the current block is spaced apart from the upper boundary of the CTU by less than 13 lines, the reference line with an index of 12 cannot be used. In this case, 5 intra prediction modes in MPMs and 4 available extended reference lines in MRLs form 20 combinations. If the current block is spaced apart from the upper boundary of the CTU by less than 8 lines, the reference line with an index of 7 cannot be used. In this case, 5 intra prediction modes in MPMs and 3 available extended reference lines in MRLs form 15 combinations. If the current coding block is spaced apart from the upper boundary of the CTU by less than 6 lines, the reference line with an index of 5 cannot be used. In this case, 5 intra prediction modes in MPMs and 4 available extended reference lines in MRLs form 10 combinations.

This means that although bins for encoding and decoding can support 25 combinations of extended reference lines in MRLs and intra prediction modes in MPMs, some combinations cannot be used in the case where the number of reference lines on the upper side of the current block is insufficient, and additional bins are still needed to support these combinations. 9 bins used for MPM and MRL are not fully utilized, and thus the performance of coding needs to be improved.

Extended reference lines and intra prediction modes need to be combined when performing intra prediction on the current block. However, in encoding and decoding methods, the MRL index list and the MPM list are constructed respectively, the MRL index and the MPM index for the current block are respectively determined according to the reference line and the intra prediction mode selected for the current block, and the MRL index and the MPM index are encoded and decoded respectively, so that the decoding end can determine the reference line and the intra prediction mode selected for the current block.

Different from the above method, the embodiments of the present disclosure provide a multiple reference line intra prediction mode, abbreviated as MRL_IP mode, which is a manner of encoding and decoding the combination of an extended reference line and an intra prediction mode.

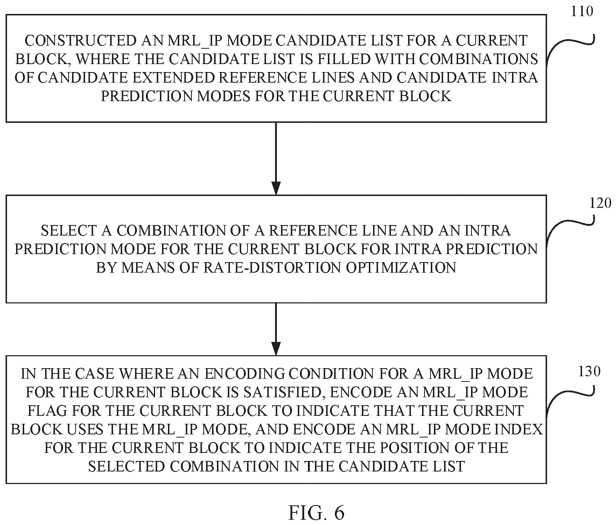

A video encoding method of the embodiments of the present disclosure is illustrated in FIG. 6, and includes the following.

Step 110, an MRL_IP mode candidate list for a current block is constructed, where the candidate list is filled with combinations of candidate extended reference lines and candidate intra prediction modes for the current block.

Step 120, a combination of a reference line and an intra prediction mode is selected for the current block for intra prediction by means of rate-distortion optimization.

Reference lines include a reference line with an index of 0 and extended reference lines. A combination of a reference line and an intra prediction mode selected for the current block may be a combination of a reference line with an index of 0 and an intra prediction mode, or a combination of an extended reference line and an intra prediction mode.

Step 130, in the case where an encoding condition for an MRL_IP mode for the current block is satisfied, an MRL_IP mode flag for the current block is encoded to indicate that the current block uses the MRL_IP mode, and an MRL_IP mode index for the current block is encoded to indicate the position of the selected combination in the candidate list. The encoding condition at least includes that: the selected combination is in the candidate list.

In the text, the candidate list is filled with the combinations of candidate extended reference lines and candidate intra prediction modes for the current block, which means that the combinations in the candidate list needs to participate in rate-distortion optimization for the current block, that is, participate in the mode selection process of selecting a prediction mode for the current block through the rate-distortion cost, so that all the combinations in the candidate list have the possibility of being selected.

In the text, parameters N, M, and K representing the number are all positive integers, and no additional explanation is needed.

The MRL_IP mode candidate list constructed in the embodiments of the present disclosure is filled with the combinations of candidate extended reference lines and candidate intra prediction modes for the current block, and is not a list containing merely candidate extended reference lines or a list containing merely candidate intra prediction modes. In the case where a combination of a reference line and an intra prediction mode selected for the current block is in the candidate list (in this case, an extended reference line is selected for the current block), that is, when the coding condition such as the combination of a reference line and an intra prediction mode selected for the current block being in the candidate list is met, the MRL_IP mode flag for the current block is encoded to indicate that the current block uses the MRL_IP mode, and the MRL_IP mode index for the current block is encoded to indicate the position of the selected combination in the candidate list. The decoding end can determine the extended reference line and the intra prediction mode selected for the current block based on the MRL_IP mode flag and the MRL_IP mode index. The method for encoding and decoding a combination in the embodiment can reduce the cost for encoding and improve the performance of encoding.

In an exemplary embodiment of the present disclosure, the MRL_IP mode candidate list is a candidate list of template-based MRL intra prediction modes constructed according to the method of the embodiments of the present disclosure. The "template-based MRL intra prediction mode" is referred to as the TMRL_IP mode, abbreviated as the TMRL mode. The TMRL_IP mode is an MRL_IP mode in which prediction on the template is performed based on the combinations and the combinations are sorted based on prediction on the template, and the MRL_IP mode is a mode in which the combinations of candidate extended reference lines and candidate intra prediction modes for the current block are filled into a candidate list for encoding and decoding, and is not limited to the TMRL_IP mode.

The TMRL_IP mode is a mode in which prediction on the template region for the current block is performed based on $N \times M$ combinations obtained from N extended reference lines and M intra prediction modes for the current block, differences between a reconstructed value of the template region and prediction values obtained by prediction are calculated, and corresponding K combinations are filled into the TMRL_IP mode candidate list for the current block in ascending order of the differences, where $1 \leq K \leq N \times M$, and K is a set value. In an example, prediction on the template region is performed based on each of 25 combinations of extended reference lines and intra prediction modes in the ECM, the 25 combinations are sorted in ascending order of the differences, and 12 combinations with the lowest differences, that is, the most likely to be selected 12 combinations, are filled into the TMRL_IP mode candidate list, so that the TMRL_IP mode index can be encoded using fewer bits. Even if some (such as extended reference lines with indexes of 7 and 12) of extended reference lines {1, 3, 5, 7, 12} are located outside the boundary of the CTU, 12 combinations the most likely to be selected can still be added to the candidate list based on the order of the 15 combinations, and thus the bits for encoding the MRL_IP mode index can still be fully and effectively utilized. Sorting in ascending order of the differences makes reference lines and prediction modes that are more likely to be selected for prediction remain in the candidate list, and the combinations more likely to be selected be ranked at the front of the list, so that the cost for coding is reduced.

Constructing the TMRL_IP mode candidate list will be described in more detail below.

In another exemplary embodiment of the present disclosure, the MRL_IP mode candidate list for the current block is not sorted based on the template, but is constructed in other manners. For example, based on the statistical results of a large amount of sample data, the combinations of reference line and intra prediction modes with the highest probability of being selected are filled into the MRL_IP mode candidate list. The MRL_IP mode candidate list can only be filled with combinations of extended reference lines and intra prediction modes, but it is not necessary. The candidate list can also be filled with combinations of the reference line with an index of 0 and other intra prediction modes. If the selected combination is a combination of the reference line with an index of 0 and an intra prediction mode in the candidate list, the MRL_IP mode index can also be encoded to indicate the selected combination.

In an exemplary embodiment of the present disclosure, the encoding condition further includes that: TIMD is not used for the current block. The method further includes the following. When TIMD is used for the current block, the encoding of the MRL_IP mode flag and the MRL_IP mode index for the current block is skipped. When TIMD is not used for the current block and the selected combination is not in the candidate list, the MRL_IP mode flag for the current block is encoded to indicate that the MRL_IP mode is not used for the current block, and the encoding of the MRL_IP mode index for the current block is skipped.

This embodiment is based on the case that the TIMD mode is encoded and decoded before the MRL_IP mode. If the TIMD mode is used for the current block, there is no need to use the MRL_IP mode, so that the encoding of the MRL_IP mode flag and the MRL_IP mode index is skipped. If the TIMD mode is not used for the current block, there are two cases: one is that the combination selected for the current block is in the MRL_IP mode candidate list, or one is that the combination selected for the current block is not in the MRL_IP mode candidate list. If the selected combination is not in the candidate list, the MRL_IP mode flag needs to be encoded to indicate that the MRL_IP mode is not used for the current block, and the encoding of the MRL_IP mode index is skipped. If the selected combination is in the candidate list, both the MRL_IP mode flag and the MRL_IP mode index need to be encoded.

When TIMD is not used for the current block, the MRL_IP mode flag and the MRL_IP mode index provided in the embodiment can replace the original multiple reference line index multiRefIdx. When TIMD is used for the current block, multiRefIdx can still be used to represent the selected reference line, and multiRefIdx is encoded.

In an exemplary embodiment of the present disclosure, constructing the MRL_IP mode candidate list for the current block includes the following. The candidate list is constructed only when all set conditions for allowing use of the MRL_IP mode for the current block are met, where the conditions for allowing use of the MRL_IP mode include any one or more of the following.

Condition 1: the current block is a block in a luma picture, that is, the MRL_IP mode is only used for luma pictures, but the present disclosure is not limited thereto.

Condition 2: the current block is not located at the upper boundary of the CTU. If the current block is located at the upper boundary of the CTU, there is no available reference line on the upper side of the current block, so that in the embodiment the condition that the current block is not located at the upper boundary of the CTU is taken as a condition for allowing use of the MRL_IP mode.

Condition 3: MRL is allowed for the current block, that is, the MRL_IP mode is allowed only when the MRL mode is allowed.

Condition 4: the size of the current block is not greater than the maximum size of the current block for which the MRL_IP mode can be used, where the maximum size can be preset. Larger blocks are generally relatively flat and less likely to have angle details. The MRL_IP mode can be restricted to be used for such large blocks.

Step 5: the aspect ratio of the current block meets the requirement for the aspect ratio of the current block for which the MRL_IP mode can be used. For example, the MRL_IP mode is allowed to be used only when the aspect ratio of the current block is not greater than a preset value.

In an exemplary embodiment of the present disclosure, the MRL_IP mode index is encoded using golomb - rice coding. Using golomb - rice coding can more reasonably classify candidate combinations into categories with different codeword lengths for encoding and decoding, thereby improving efficiency of coding.

Take K=12 and the divisor is 4 as an example, assuming that the number to be encoded is n, $n \in [0,12]$, *prefix* and *suffix* are calculated according to the following formula: *prefix* = [*n*/4], *suffix* = *n* - *prefix* × 4.

Each bin in *prefix* is encoded and decoded using context model-based truncated unary. The values of *prefix* and output bits are illustrated in the following table:

| Prefix | Output bit |
|--------|-----------|
| 0 | 0 |
| 1 | 10 |
| 2 | 11 |

Each bin in *suffix* is encoded and decoded using equal probably truncated binary. The values of *suffix* and output bits are illustrated in the following table:

| Suffix | Output bit |
|--------|-----------|
| 0 | 00 |
| 1 | 01 |
| 2 | 10 |
| 3 | 11 |

For different values of K, the method of calculating *prefix* and *suffix* can be adjusted according to different values of K, such as setting different divisors. Although in the above example, context model-based truncated unary is used for *prefix* and equal probably truncated binary is used for *suffix,* in other examples, equal probably truncated unary may be used for *prefix* and context model-based truncated binary may be used for *suffix,* etc., and there is no specific limitations on the present disclosure regarding this aspect.

In an exemplary embodiment of the present disclosure, when the encoding condition for the MRL_IP mode for the current block is met, the method further includes: skipping the encoding of syntax elements of any one or more of the following modes: the MPM, the ISP mode, a multiple transform selection (MTS) mode, a low-frequency non-separable transform (LFNST) mode, the TIMD mode.

For example, when the MRL_IP mode is encoded and decoded before the TIMD mode, the encoding condition for the MRL_IP mode does not include that TIMD is not used for the current block. When the MRL_IP mode is used for the current block, TIMD is not allowed for the current block, and the encoding of syntax elements of the TIMD mode can be skipped.

For example, when the MRL_IP mode is used for the current block, the reference line and the intra prediction mode selected for the current block can be both indicated by the MRL_IP mode flag and the MRL_IP mode index. In this case, there is no need to encode and decode MPM-related syntax elements.

For example, in a specific transform mode, the MRL_IP mode may be restricted from being used simultaneously with the MTS mode and/or the LFNST mode.

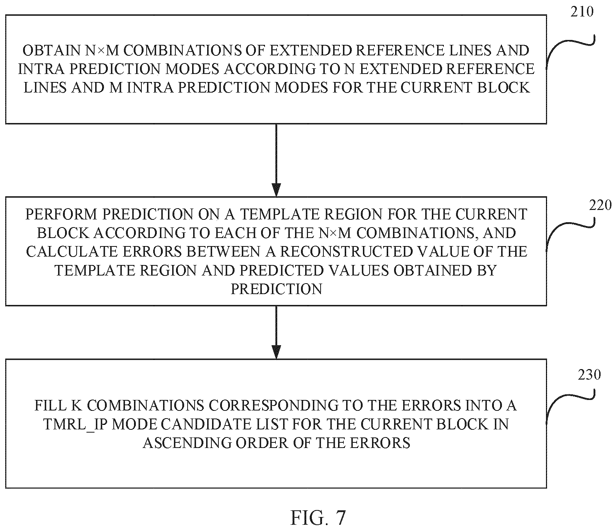

An embodiment of the present disclosure provides a method for constructing a TMRL_IP mode candidate list. As illustrated in FIG. 7, the method includes the following.

Step 210, N × M combinations of extended reference lines and intra prediction modes are obtained according to N extended reference lines and M intra prediction modes for the current block, where N ≥ 1, M ≥ 1, and N × M ≥ 2.

Step 220, prediction on a template region for the current block is performed according to each of the N × M combinations, and differences between a reconstructed value of the template region and prediction values obtained by prediction are calculated.

The difference in this step can be expressed by the sum of absolute differences (SAD) or the sum of absolute transformed differences (SATD), but is not limited to this. The difference of the step can also be expressed by the sum of squared differences (SSD), the mean absolute difference (MAD), the mean squared difference (MSE), etc.

Step 230, K combinations corresponding to the differences are filled into a TMRL_IP mode candidate list for the current block in ascending order of the differences, where 1 ≤ K ≤ N × M.

In the embodiment, to construct the TMRL_IP mode candidate list for the current block, N × M combinations are obtained according to N extended reference lines and M intra prediction modes, prediction on the template region for the current block is performed according to each of the N × M combinations, and the differences between the reconstructed value of the template region and the prediction values are calculated, and the corresponding K combinations are filled into the candidate list in ascending order of the differences. By means of the candidate list constructed in the embodiment, encoding of a combination of an extended reference line and an intra prediction mode can be realized, thereby improving the efficiency of encoding. Moreover, by using different combinations to predict the template region and by sorting the differences, it is possible to select, based on the similarity in distribution characteristics between the current block and the template region for the current block, K combinations with a relatively great possibility of being selected from the $N \times M$ combinations, and the combinations with a relatively great possibility of being selected are placed at the front of the candidate list, so that the TMRL_IP mode index for the selected combination to be encoded is relatively small, thereby reducing the actual cost for encoding.

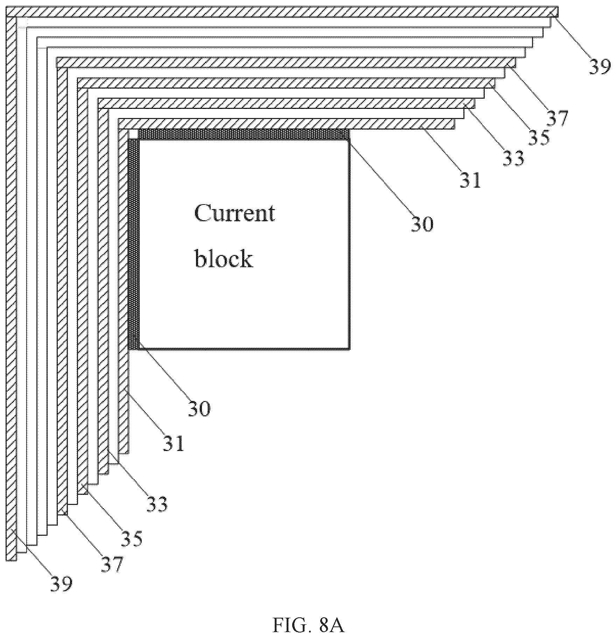

In an exemplary embodiment of the present disclosure, the template region for the current block is located in a reference line closest to the current block, or, the template region for the current block is located in multiple reference lines closest to the current block, where N extended reference lines are extended reference lines located outside the template region. In FIG. 8A, the template region for the current block is located in a reference line 30 with an index of 0, and to construct the TMRL_IP mode candidate list, N extended reference lines that can be used are selected from predefined extended reference lines with indexes of {1, 3, 5, 7, 12}. If there are more than 13 reference lines between the upper side of the current block and the boundary of the CTU, 5 extended reference lines with indexes of {1, 3, 5, 7, 12} are selected to participate in combination. If there are 6 or 7 reference lines between the upper side of the current block and the boundary of the CTU, 3 extended reference lines with indexes of {1, 3, 5} are selected to participate in combination, and so on.

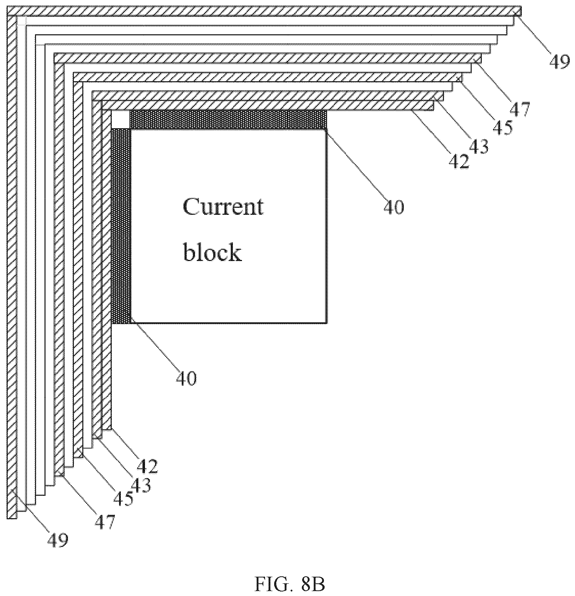

FIG. 8A illustrates 5 extended reference lines involved in combination, including a reference line 31 with an index of 1, a reference line 33 with an index of 3, a reference line 35 with an index of 5, a reference line 37 with an index of 7, and a reference line 39 with an index of 12. Different from FIG. 8A, in the example illustrated in FIG. 8B, a template region 40 for the current block is located in two reference lines with indexes of 0 and 1, and extended reference lines involved in combination are 5 extended reference lines, namely a reference line 42 with an index of 2, a reference line 43 with an index of 3, a reference line 45 with an index of 5, reference line 47 with an index of 7, and a reference line 49 with an index of 12. That is, in the example, N extended reference lines that can be used are selected from predefined extended reference lines with indexes of {2, 3, 5, 7, 12}. There are many other options for selection of the template region and extended reference lines, such as setting the template region for the current block to be in 3 reference lines with indexes of 0, 1, and 2, setting the template region for the current block to be in 4 reference lines with indexes of 0 to 3, and so on. When the template region is relatively wide, the prediction is relatively more accurate.

In an exemplary embodiment of the present disclosure, N extended reference lines for the current block are extended reference lines located outside the template region for the current block and not exceeding the boundary of the CTU among $N_{max}$ predefined extended reference lines, where $N_{max}$ is the maximum number of extended reference lines that can be used for the TMRL_IP mode. In the embodiment, N extended reference lines used for combination are set to be located outside the template region for the current block and not exceeding the boundary of the CTU. However, if the hardware provides support, extended reference lines exceeding the boundary of the CTU can also be selected to participate in combination.

In an exemplary embodiment of the present disclosure, $N_{max} = 5$, and 5 predefined extended reference lines are reference lines with indexes of {1, 3, 5, 7, 12} or {2, 3, 5, 7, 12}. In another exemplary embodiment of the present disclosure, $N_{max}$ predefined extended reference lines are $N_{max}$ extended reference lines closest to the current block, with indexes starting from 1. Alternatively, $N_{max}$ predefined extended reference lines are $N_{max}$ extended reference lines closest to the current block, with odd indexes starting from 1. Alternatively, $N_{max}$ predefined extended reference lines are $N_{max}$ extended reference lines closest to the current block, with even indexes starting from 2. Selection of odd reference lines or even reference lines can simplify the operation.

In an exemplary embodiment of the present disclosure, the M intra prediction modes are only allowed to be selected from angular modes, or only allowed to be selected from angular modes and the DC mode, or allowed to be selected from angular modes, the DC mode, and the planar mode.

In an exemplary embodiment of the present disclosure, the M intra prediction modes are selected through the following process.

Step 1: intra prediction modes used for prediction blocks at multiple neighbouring positions around the current block are determined, intra prediction modes that are allowed to be selected are selected in sequence, and repeated modes are removed. When the number of intra prediction modes selected in step 1 is equal to M, the process ends. When the number of the intra prediction modes selected in step 1 is less than M and the selected intra prediction modes include an angular mode, the process proceeds to step 2.

Step 2, starting from the first angular mode that has been selected, an extension operation is performed on angular modes in sequence to obtain extended angular modes, and extended angular modes that are different from all the selected angular modes are selected until the total number of selected intra prediction modes is equal to M.

In an example of the embodiment, in step 1, for the current block located at the upper boundary of the CTU and the current block not located at the upper boundary of the CTU, the prediction blocks at multiple neighbouring positions around the current block include some or all of the following prediction blocks: a prediction block on the left side of the current block, a prediction block on the upper side of the current block, a prediction block on the upper left side of the current block, a prediction block on the bottom left side of the current block, and a prediction block on the upper right side of the current block. As illustrated in FIG. 3, the prediction block on the left side of the current block, the prediction block on the upper side of the current block, the prediction block on the upper left side of the current block, the prediction block on the bottom left side of the current block, and the prediction block on the upper right side of the current block are respectively marked with L, A, AL, BL, and AR in the figure, where M ≥ 5.

In this example, for the current block at the upper boundary of the CTU, M intra prediction modes can be selected for combination from intra prediction modes used for the prediction blocks at neighbouring positions such as the upper side, the upper left side, and the upper right side of the current block, that is, the restrictions for accessing the prediction blocks at these positions are cancelled. Therefore, for constructing a candidate list for the current block at the upper boundary of the CTU, more diverse intra prediction modes can participate in combination, which increases the diversity of the combinations in the constructed candidate list, and thus improving the performance of encoding.

In an example of the embodiment, multiple neighbouring positions around the current block include 5 neighbouring positions around the current block, and the 5 neighbouring positions are upper left, upper, upper right, left, and bottom left in sequence, as illustrated in FIG. 3.

In an example of the embodiment, when the number of intra prediction modes selected based on the intra prediction modes used for the prediction blocks at multiple neighbouring positions around the current block is less than M, step 1 further includes: continuing to select an intra prediction mode(s) for participating in combination in at least one of the following manner. According to reconstructed values around the current block, two intra prediction modes are derived using the gradient histogram for decoder-side intra mode derivation (DIMD), and an intra prediction mode(s) that is different from all the selected intra prediction modes is selected from the two derived intra prediction modes. If the selected intra prediction modes do not include the DC mode, the DC mode is selected.

In this example, the intra prediction mode for participating in combination can be selected from the intra prediction modes derived using DIMD and/or the DC mode. This manner can increase the diversity of intra prediction modes for participating in combination, and thus increasing the diversity of the combinations in the constructed candidate list to improve the performance of encoding.

In an example of the present embodiment, in step 2, for all the angular modes selected in step 1, starting from the first angular mode selected, the following operations are performed in sequence according to a set order: an extension operation is performed on an angular mode to obtain an extended angular mode, and if the extended angular mode is different from all the selected angular modes, the extended angular mode is selected; when the total number of selected intra prediction modes is equal to M, the process ends. Where the number of all the angular modes selected in step 1 is greater than or equal to 1 and less than or equal to 5, that is, when all the intra prediction modes selected in step 1 are angular modes, the extension operation can also be performed on each of all the angular modes without a reduction in the number, which can increase the possibility of extended angular modes, thereby improving performance of encoding.

In an example of the present embodiment, the process of selecting the M intra prediction modes further includes the following. When no angular mode is selected in step 1, or the total number of selected intra prediction modes after step 2 is still less than M, step 3 is performed: intra prediction modes allowed to be selected from a predefined intra prediction mode set are determined, and intra prediction modes that are different from all the selected intra prediction modes are selected from the determined intra prediction modes allowed to be selected until the total number of selected intra prediction modes is equal to M.

In one example of the present embodiment, in the process of selecting the M intra prediction modes, only angular modes are allowed to be selected. In another example of the present embodiment, in the process of selecting the M intra prediction modes, only angular modes and the DC mode are allowed to be selected. In another example of the present embodiment, in the process of selecting the M intra prediction modes, angular modes, the DC mode, and the planar mode are allowed to be selected. The effect is limited in the case where the planar mode is combined with extended reference lines, and thus the planar mode may not participate in combination. The situation of the DC mode is similar. However, if the increased computational complexity can be accepted, the planar mode and the DC mode can also be added to the candidate list for combination.

In an example of the embodiment, the extended operation on angular modes includes any one or more of the following operations: performing a +/-1 operation on angular modes; performing a +/-2 operation on angular modes; performing a +/-3 operation on angular modes; and performing +/-4 operations on angular modes.

In an exemplary embodiment of the present disclosure, the M intra prediction modes include some or all of intra prediction modes except the planar mode in MPMs; or, include some or all of the intra prediction modes except the planar mode in the MPMs and secondary MPMs; or, include some or all of the intra prediction modes except the planar mode and the DC mode in the MPMs; or, include some or all of the intra prediction modes except the planar mode and the DC mode in the MPMs and the secondary MPMs; or, include some or all of the intra prediction modes except the planar mode, the DC mode, and the DIMD mode in the MPMs; or, include some or all of the intra prediction modes except the planar mode, the DC mode, and the DIMD mode in the MPMs and the secondary MPMs.

In this embodiment, all intra prediction modes except the planar mode in the MPMs are used as predefined intra prediction modes, or all intra prediction modes except the planar mode in the MPMs and the secondary MPMs are used as predefined intra prediction modes. When reference lines for the current block include all predefined extended reference lines, all the predefined intra prediction modes are used. When the reference lines for the current block include only some of the predefined extended reference lines, some of the predefined intra prediction modes are used.

In an exemplary embodiment of the present disclosure, the M intra prediction modes are selected in the following manner. M' intra prediction modes are selected. According to each of reference lines for the current block located outside the template and the M' intra prediction modes, prediction on the template for the current block is performed and the difference between the reconstructed value of the template and each prediction value obtained by prediction is calculated to obtain M' differences. M intra prediction modes with the lowest differences are selected from the M' intra prediction modes as the M intra prediction modes for participating in combination, where M < M'.

In the embodiment, the template for the current block is used to select the M intra prediction modes from the M' intra prediction modes, but the forgoing template region for the current block is used to select K combinations from $N \times M$ combinations. The two templates can be different, but can also occupy the same region.

In the present embodiment, various manners for selecting the M intra prediction modes in the above embodiments of the present disclosure can be used to select the M' intra prediction modes. For example, the M' intra prediction modes can be directly selected from the MPM list and the secondary MPM list, or selected through step 1 in the method of the above embodiment, or selected through step 1 and step 2 in the method of the above embodiment, or selected through step 1, step 2, and step 3 in the method of the above embodiment, and so on.

In an exemplary embodiment of the present disclosure, $N \leq N_{max}$, $2 \leq N_{max} \leq 12$; $2 \leq M \leq 18$; $K \leq K_{max}$, $6 \leq K_{max} \leq 36$, where $N_{max}$ is the maximum number of extended reference lines allowed to be used for the TMRL_IP mode, and $K_{max}$ is the maximum number of candidate combinations allowed to be used for the TMRL_IP mode. Although the value ranges of the relevant parameters of N, M and K are given here, this is only exemplary, and these value ranges should not be regarded as limitations to the present disclosure. In other embodiments of the present disclosure, values may not be taken from these value ranges of the present embodiment.

In one example of this embodiment, N = 5, M =10, K = 20. In another example, N = 5, M = 6, K = 12. In another example, N = 5, M = 8, K = 16. In another example, N = 5, M = 12, K = 24.

In an exemplary embodiment of the present disclosure, N, M and K have at least two sets of values, the first set of values is $N_1$, $M_1$, and $K_1$, and the second set of values is $N_2$, $M_2$, and $K_2$, where $N_1 \leq N_2$, $M_1 \leq M_2$, $K_1 \leq K_2$, and $N_1 \times M_1 < N_2 \times M_2$. The first set of values is used for constructing a candidate list for the current block of a first size, the second set of values is used for constructing a candidate list for the current block of a second size, and the first size is less than the second size. The first size and the second size here can represent multiple sizes respectively, for example, the first size can include $4 \times 4$, $4 \times 8$, $8 \times 8$, etc., and the second size can include $16 \times 8$, $16 \times 16$, $8 \times 16$, etc.

In the embodiment, different values of N, M and K are used for current blocks of different sizes. When the size of the current block is relatively small, relatively small values are used to construct the TMRL_IP mode candidate list. When the size of the current block is relatively large, relatively large values are used to construct the TMRL_IP mode candidate list. Therefore, a better balance can be achieved between the complexity of the operation and the performance.

In an exemplary embodiment of the present disclosure, performing prediction on the template region for the current block according to each of the $N \times M$ combinations includes the following. When the current block is located at the left boundary of the picture, prediction on the upper template region for the current block is performed according to each of the $N \times M$ combinations, and no prediction is performed on the left template region for the current block. In this embodiment, the operation can be simplified and the time required for the operation can be reduced without affecting the performance.

In an exemplary embodiment of the present disclosure, performing prediction on the template region of the current block according to each of the $N \times M$ combinations includes: performing prediction in the following manner according to each of the $N \times M$ combinations. An initial prediction value of the template region is calculated according to a reconstructed value of an extended reference line in the combination and an intra prediction mode in the combination, where the reconstructed value of the extended reference line is an original reconstructed value of the extended reference line or a filtered reconstructed value of the extended reference line. 4- tap filtering or 6-tap filtering is performed on the initial prediction value of the template region, and the filtering result is used as the prediction value of the template region obtained by prediction based on the combination.

In the embodiment, to predict the template region for the current block, the reconstructed value of the extended reference line may not be filtered, and the original reconstructed value of the extended reference line is used for calculation. A filter with relatively short taps (such as a 4-tap filter) may be used to reduce the complexity of calculation and speed up the calculation.

In an exemplary embodiment of the present disclosure, performing prediction on the template region for the current block according to each of the $N \times M$ combinations and calculating the differences between the reconstructed value of the template region and the prediction values obtained by prediction include the following. Prediction on the entire template region for the current block is performed according to each of K combinations to obtain corresponding K differences, where the K differences form a difference set, and the maximum difference in the difference set is denoted as $D_{max}$. For each of the remaining combinations, prediction on the template region on a side of the current block is firstly performed according to the combination, difference $D_1$ between a reconstructed value of the template region on the side of the current block and a prediction value of the template region on the side of the current block is calculated. If $D_1 \geq D_{max}$, the prediction based on the combination is completed. If $D_1 < D_{max}$, prediction on the template region on another side of the current block is performed according to the combination, and difference $D_2$ between a reconstructed value of the entire template region for the current block and a prediction value of the entire template region for the current block is calculated. If $D_2 < D_{max}$, $D_2$ is added to the difference set, $D_{max}$ is deleted from the difference set and maximum difference $D_{max}$ in the difference set is updated. If $D_2 \geq D_{max}$, the prediction based on the combination is completed. After the prediction based on the N × M combinations is completed, K combinations corresponding to K differences in the difference set are taken as the K combinations with the lowest differences.

In one example, the differences in the difference set can be arranged in ascending order, and when $D_2$ is added to the difference set, the position where $D_2$ is inserted should make the differences in the difference set still arranged in ascending order. However, in other examples, the K differences in the difference set can also be sorted after the prediction based on all the N × M combinations is completed.

In the embodiment, the combinations can be sorted without performing, based on all the combinations, prediction and difference calculation on the entire template region, which can reduce the complexity of the operation and speed up the operation.

In an exemplary embodiment of the present disclosure, the K combinations corresponding to the differences are filled into the TMRL_IP mode candidate list for the current block in ascending order of the differences as follows. Starting from the first position of the candidate list, the K combinations corresponding to the differences are filled into the candidate list in ascending order of the differences. The TMRL_IP mode candidate list in the embodiment is only filled with combinations of extended reference lines and intra prediction modes. The combinations of the reference line with an index of 0 and intra prediction modes are indicated by other traditional modes, such as MPMs.

In another exemplary embodiment of the present disclosure, starting from the i-th position of the candidate list, K combinations corresponding to the differences are filled into the candidate list in ascending order of the differences. The position(s) before the i-th position in the candidate list is filled with a combination(s) of the reference line with an index of 0 and one or more intra prediction modes, where i ≥ 2. The TMRL_IP mode candidate list in the embodiment is not only filled with combinations of extended reference lines and intra prediction modes, but also a combination(s) of the reference line with an index of 0 and an intra prediction mode(s). In this case, when the combination selected for the current block is a combination of the reference line with an index of 0 and an intra prediction mode, the combination can also be represented by the TMRL_IP mode index. In this case, the TMRL_IP mode index can still be used.

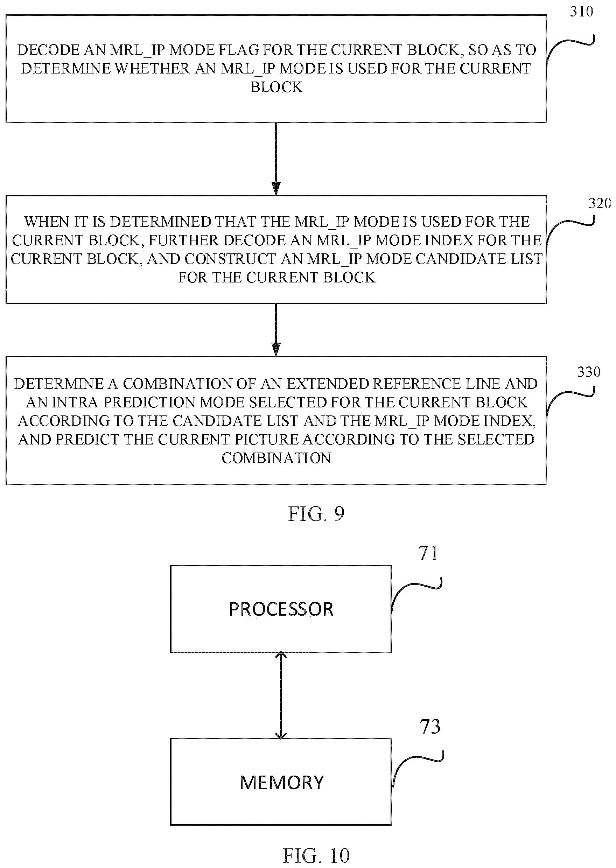

An embodiment of the present disclosure provides a video decoding method as illustrated in FIG. 9. The method includes the following.

Step 310, an MRL_IP mode flag for the current block is decoded, so as to determine whether an MRL_IP mode is used for the current block.

Step 320, when it is determined that the MRL_IP mode is used for the current block, an MRL_IP mode index for the current block is further decoded, and an MRL_IP mode candidate list for the current block is constructed, where the candidate list is filled with combinations of candidate extended reference lines and candidate intra prediction modes for the current block.

Step 330, a combination of an extended reference line and an intra prediction mode selected for the current block is determined according to the candidate list and the MRL_IP mode index, and prediction on the current picture is performed according to the selected combination. The TMRL_IP mode index is used to indicate the position of the selected combination of an extended reference line and an intra prediction mode in the candidate list.

In the present embodiment, after it is determined that the MRL_IP mode is used for the current block by decoding the MRL_IP mode flag, the combinations of extended reference lines and intra prediction modes are filled into the MRL_IP mode candidate list, the combination selected for the current block is determined according to the MRL_IP mode index obtained by decoding and the candidate list, and prediction on the current block is performed based on the combination selected. That is, the MRL_IP mode index can indicate both the extended reference line and the intra prediction mode selected for the current block, and there is no need to use two indexes to respectively indicate the extended reference line and the intra prediction mode, thereby reducing cost for decoding.

In an exemplary embodiment of the present disclosure, the MRL_IP mode candidate list is the TMRL_IP mode candidate list constructed according to the method of the embodiments of the present disclosure. However, the MRL_IP mode constructed in other embodiments of the present disclosure is not limited to the TMRL_IP mode. For example, based on the statistical results of a large amount of sample data, a combination(s) of a reference line(s) and an intra prediction mode(s) with the highest probability of being selected can be filled into the MRL_IP mode candidate list. The MRL_IP mode candidate list can be filled with only combinations of extended reference line and intra prediction modes, but can also be filled with combinations of the reference line with an index of 0 and other intra prediction modes.

In the embodiment, for constructing the TMRL_IP mode candidate list, K can be a set value, but K in the embodiment is determined according to the TMRL_IP mode index. When the TMRL_IP mode index indicates that the selected combination of an extended reference line and an intra prediction mode is located at the L-th position in the candidate list, K = L, and L is a positive integer. For example, the TMRL_IP mode index is 5, and assuming that the indexes are numbered from 0, the TMRL_IP mode index of 5 indicates that the selected combination is located at the 6-th position in the candidate list, and thus K = 6. Different from the decoding end, the encoding end needs to determine the TMRL_IP mode index according to the position of the selected combination in the candidate list, and thus needs to use the set value of K. After the decoding end obtains the TMRL_IP mode index by parsing, the candidate list constructed only needs to contain the combination at the position indicated by the TMRL_IP mode index. By reducing the number of combinations filled in the TMRL_IP mode candidate list for the current block, the operation of constructing the candidate list can be simplified and computing resources can thus be saved.

In an exemplary embodiment of the present disclosure, before decoding the MRL_IP mode flag for the current block, the method further includes the following. When all conditions for allowing use of the MRL_IP mode for the current block are met, the MRL_IP mode flag for the current block is decoded, where the conditions for allowing use of the MRL_IP mode include any one or more of the following: the current block is a block in a luma picture; MRL is allowed for the current block; the current block is not located at the upper boundary of the CTU; TIMD is not used for the current block.

In the embodiment, when one of the above conditions is met, the MRL_IP mode is not allowed to be used, and the decoding for the MRL_IP mode flag and the MRL_IP mode index can be skipped. However, this is not necessarily the case in other embodiments. For example, when the MRL_IP mode is encoded and decoded before TIMD, the use of TIMD for the current block cannot be used as a condition for not allowing use of the MRL_IP mode. For another example, in the future, when the hardware can support obtaining reference lines outside the boundary of the CTU, the current block being located at the upper boundary of the CTU will no longer be a condition for not allowing use of the MRL_IP mode, and so on.

In an exemplary embodiment of the present disclosure, the method further includes the following. In the case where it is determined, through decoding, that MRL is allowed for the current block, the current block is not located at the upper boundary of the CTU, and TIMD is used for the current block, an MRL index for the current block is decoded, where the MRL index is used to indicate the position of a reference line selected for the current block in an MRL index list. In the embodiment, in the case where TIMD is used for the current block, the MRL_IP mode is not allowed to be used, but MRL is still allowed to be used, and thus the reference line selected for the current block can still be determined by decoding the MRL index for the current block, and then prediction on the current block can be performed according to the selected reference line in conjunction with the TIMD mode selected for the current block.

In an exemplary embodiment of the present disclosure, when it is determined according to the MRL_IP mode flag that the MRL_IP mode is used for the current block, the method further includes: skipping the decoding for syntax elements of any one or more of the following modes: an MPM, an ISP mode, an MTS mode, an LFNST mode, and the TIMD mode. If encoding for one or more of the above modes are skipped at the encoding end in the case where the MRL_IP mode flag is used for the current block, correspondingly, the decoding end also skips decoding for these modes in the case where the decoding end determines through decoding that the MRL_IP mode flag is used for the current block.

An embodiment of the present disclosure further provides a video decoding method, which specifically involves a decoding process of intra prediction, and also describes an encoding process of intra prediction at an encoding end.

In the embodiment, the encoding end constructs a TMRL_IP mode candidate list. When a combination in the candidate list is selected for the current block through mode selection, syntax elements of a TMRL_IP mode are encoded and decoded. By encoding and decoding combinations of extended reference lines and intra prediction modes (traditional intra prediction modes, including a DC mode, a planar mode, and multiple angular modes), the efficiency of encoding can be improved.

In the embodiment, according to N predefined extended reference lines and M intra prediction modes, a template is constructed in a reference line with an index of 0, i.e., reference line0. (x, -1), (-1, y) are coordinates of positions relative to the upper left corner (0, 0) of the current block. In the embodiment, a template region of 1 row and 1 column for the current block can refer to the template region 30 illustrated in FIG. 8A. In the figure, 5 predefined extended reference lines with indexes of {1, 3, 5, 7, 12} are added.

For constructing the TMRL_IP mode candidate list, SADs between the prediction values of the template based on the $N \times M$ combinations and a reconstructed value of the template are calculated, corresponding combinations are sorted in ascending order of SADs, and K combinations with relatively small SADs are filled into the TMRL_IP mode candidate list in ascending order of SADs, where $N \times M \geq 2$.

The construction of the TMRL_IP mode candidate list is an operation that both the encoder and the decoder need to perform. When encoding conditions such as a combination selected for the current block being in the candidate list are met, the encoding end encodes a TMRL_IP mode flag to indicate the use of the TMRL_IP mode, and also determines a TMRL_IP mode index according to the position of the selected combination in the candidate list. For example, when the selected combination is in the first position, the TMRL_IP mode index is 0, when the selected combination is in the second position, the TMRL_IP mode index is 1, and so on. The TMRL_IP mode index can be encoded using golomb - rice coding, but the present disclosure is not limited to thereto.

The following is illustrated by taking that N = 5, M = 6, and K = 12 as an example. The indexes of 5 predefined extended reference lines are {1, 3, 5, 7, 12}, and 6 intra prediction modes are selected step by step.

The video decoding method of the embodiment includes the following.

Step 1: syntax elements related to the TMRL_IP mode are decoded.

The decoder parses syntax elements related to intra prediction modes, including syntax elements related to a TIMD mode, an MRL mode, and other modes. The TMRL_IP mode proposed in the embodiment can be regarded as an evolution of the MRL mode, and the syntax elements of the TMRL_IP mode can also be regarded as part of the syntax elements of the MRL mode. Certainly, the two modes can also be regarded as two different modes.

In the case where TIMD is used for the current block, the manner for decoding the syntax elements of the MRL mode remains unchanged. In the case where the TIMD mode is not used for the current block, the syntax elements of the TMRL_IP mode need to be decoded. Syntax elements for the current block are decoded as illustrated in the following table:

| coding_unit(x0, y0, cbWidth, cbHeight, eqtDepth, treeType, modeType) { | Descriptor |
|---|---|
| ... ... | |
| if(pred_mode_plt_flag) | |
| palette_coding(x0, v0, cbWidth, cbHeight, treeType) | |
| else { | |
| if( sps_bdpcm_enabled_flag && <br> cbWidth <= MaxTsSize && cbHeight <= MaxTsSize ) | |
| **intra_bdpcm_luma_flag** | ae(v) |
| if( intra_bdpcm_luma_flag ) | |
| **intra_bdpcm_luma_dir_flag** | ae(v) |
| else { | |
| if( sps_mip_enabled_flag) | |
| **intra_mip_flag** | ae(v) |
| if( intra_mip_flag ) { | |
| **intra_mip_transposed_flag**[x0][y0] | ae(v) |
| **intra_mip_mode**[x0][y0] | ae(v) |
| } else { | |
| if( sps_timd_enable_flag && cbWidth * cbHeight <= 1024 ) | |
| **intra_timd_flag** | ae(v) |
| if( sps_mrl_enabled_flag && ( (y0 % CtbSizeY)> 0) && !intra timd flag) | |
| **cu_tmrl_flag** | ae(v) |
| **if(cu_tmrl_flag )** | |
| **tmrl_idx** | ae(v) |
| if( sps_mrl_enabled_flag && ( (y0 % CtbSizeY) >0) && intra_timd_flag ) | |
| **intra_luma_ref_idx** | ae(v) |
| if( sps_isp_enabled_flag && intra_luma_ref_idx = = 0 && <br> ( cbWidth <= MaxTbSizeY && cbHeight <= MaxTbSizeY ) && <br> ( cbWidth * cbHeight > MinTbSizeY * MinTbSizeY ) && <br> !cu_act_enabled_flag && **!cu_tmrl_flag**) | |
| **intra_subpartitions_mode_flag** | ae(v) |
| if( intra_subpartitions_mode_flag == 1 ) | |
| **intra_subpartitions_split_flag** | ae(v) |

(continued)

| | |
|---|---|
| if( !intra timd mode ){ | |
| if( intra_luma_ref_idx == 0 ) | |
| **intra_luma_mpm_flag**[x0][y0] | ae(v) |
| if( intra_luma_mpm_flag[x0][y0] ) { | |
| if( intra_luma_ref_idx = = 0 ) | |
| **intra_luma_not_planar_flag**[x0][y0] | ae(v) |
| if( intra_luma_not_planar_flag[x0][y0] ) | |
| **intra_luma_mpm_idx**[x0][y0] | ae(v) |
| } else | |
| **intra_luma_mpm_remainder**[x0][y0] | ae(v) |
| } | |
| } | |
| } | |
| } | |
| } | |
| ... ... | |

"cu_tmrl_flag" in the table is the TMRL_IP mode flag. When the value of "cu_tmrl_flag" is equal to 1, it means that the TMRL_IP mode is used for the current block, that is, it is defined that the intra prediction type for the current luma sample is the TMRL_IP mode. When the value of "cu_tmrl_flag" is equal to 0, it means that the TMRL_IP mode is not used for the current block, that is, it is defined that the intra prediction mode type for the current luma sample is not the TMRL_IP mode.

"tmrl_idx" in the table is the TMRL_IP mode index, which indicates the position of a combination of an extended reference line and an intra prediction mode selected for the current block in the TMRL_IP mode candidate list. It can also be said that "tmrl_idx" defines the index of the selected combination in the candidate list containing sorted TMRL_IP modes (the index indicating the position of the combination). "tmrl_idx" can be encoded and decoded using the golomb - rice coding, which will not be repeated here.

As can be seen from the above table, before decoding cu_tmrl_flag, whether the following conditions are met is determined first: MRL is allowed for the current block (i.e., whether sps_mrl_enabled_flag is 1); the current block is not located at the upper boundary of the CTU (i.e., whether y0 % CtbSizeY > 0); and TIMD is not used for the current block. When these conditions are met, cu_tmrl _flag is decoded. If the other two conditions are met and TIMD is used for the current block, the MRL index intra_luma_ref_idx for the current block is decoded.

The ISP mode flag intra_subpartitions_mode_flag in the table is decoded after the syntax elements related to the TMRL_IP mode. If the TMRL_IP mode is not used for the current block (! cu tmrl flag is true), then intra_subpartitions_mode_flag is decoded.

Step 2: the TMRL_IP mode candidate list is constructed, and an extended reference line and an intra prediction mode selected for the current block is determined according to the TMRL_IP mode index and the candidate list. After the parsing stage, before performing prediction on the current block, when the TMRL_IP mode is used for the current block, it is necessary to construct the TMRL_IP mode candidate list, and the extended reference line and the intra prediction mode selected for the current block are determined according to the TMRL_IP mode index and the candidate list.

To construct the TMRL_IP mode candidate list, it is necessary to first determine candidate extended reference lines and candidate intra prediction modes.

■ Determine candidate extended reference lines

Candidate extended reference lines are selected from predefined extended reference lines. Which of the predefined extended reference lines can be used is determined according to the position of the current block in the picture. In principle, upper reference lines that can be used for the current block should not exceed the upper boundary of the CTU. In one example, among extended reference lines with indexes of {1, 3, 5, 7, 12}, extended reference lines that do not exceed the boundary of the CTU are added to candidate extended reference lines. In order to obtain better performance of encoding and decoding or to reduce complexity, more or fewer extended reference lines can be used.

■ Determine candidate intra prediction modes

In the embodiment, the TMRL_IP mode is not bound with the MPM (may be bound with the MPM in other embodiments), but an intra prediction mode candidate list is constructed, and intra prediction modes used for combination are selected from the candidate list. The method for deriving the candidate list is as follows.

First, among 67 traditional prediction modes, the planar mode and the DC mode are excluded, or only the planar mode is excluded and the DC mode is retained. The excluded mode(s) is not added to the candidate list, that is, not used as an intra prediction mode for participating in combination in TMRL_IP modes.

In the embodiment, the length of the prediction mode candidate list to be constructed is 6. For constructing the prediction mode candidate list, non-repeated intra prediction modes are selected in sequence according to intra prediction modes used for prediction blocks at 5 neighbouring positions around the current block to fill the prediction mode candidate list. In one example, the prediction blocks at the neighbouring positions around the current block (referred to as blocks for short) are accessed in the following order to obtain the intra prediction modes for the blocks, and selection is performed on the intra prediction modes for the blocks.

A left block is accessed to determine whether the block is an intra coding block. If so, and an intra prediction mode for the block is not the planar mode, then the intra prediction mode for the block is selected and filled into the candidate list.

An upper block is accessed to determine whether the block is an intra coding block. If so, and an intra prediction mode for the block is not the planar mode and is not a repeated mode of any existing intra prediction mode in the candidate list (that is, different from all the existing intra prediction modes), then the intra prediction mode for the block is selected and filled into the candidate list.

The left block is accessed to determine whether the block is an inter coding block. If so, and an intra prediction mode for the block is not the planar mode and is not a repeated mode of any existing intra prediction mode in the candidate list, then the intra prediction mode for the block is selected and filled into the candidate list.

The upper block is accessed to determine whether the block is an inter coding block. If so, and an intra prediction mode for the block is not the planar mode and is not a repeated mode of any existing intra prediction mode in the candidate list, then the intra prediction mode for the block is selected and filled into the candidate list.

An upper - left block is accessed to determine whether the block is an intra coding block. If so, and an intra prediction mode for the block is not the planar mode and is not a repeated mode of any existing intra prediction mode in the candidate list, the intra prediction mode for the block is selected and filled into the candidate list.

A bottom - left block is accessed to determine whether the block is an intra coding block. If so, and an intra prediction mode for the block is not the planar mode and is not a repeated mode of any existing intra prediction mode in the candidate list, the intra prediction mode for the block is selected and filled into the candidate list.

An upper - right block is accessed to determine whether the block is an intra coding block. If so, and an intra prediction mode for the block is not the planar mode and is not a repeated mode of any existing intra prediction mode in the candidate list, the intra prediction mode for the block is selected and filled into the candidate list.

The upper - left block is accessed to determine whether the block is an inter coding block. If so, and an intra prediction mode for the block is not the planar mode and is not a repeated mode of any existing intra prediction mode in the candidate list, the intra prediction mode for the block is selected and filled into the candidate list.

The bottom - left block is accessed to determine whether the block is an inter coding block. If so, and an intra prediction mode for the block is not the planar mode and is not a repeated mode of any existing intra prediction mode in the candidate list, the intra prediction mode for the block is selected and filled into the candidate list.

The upper - right block is accessed to determine whether the block is an inter coding block. If so, and an intra prediction mode for the block is not the planar mode and is not a repeated mode of any existing intra prediction mode in the candidate list, the intra prediction mode for the block is selected and filled into the candidate list.

The current block of the embodiment of the present disclosure (including other embodiments) may be a block in an inter coding picture or a block in an intra coding picture. When the current block is a block in an inter coding picture and is determined as an intra coding block (a block predicted using an intra prediction mode) through parsing, a prediction block at a neighbouring position of the intra coding block may be an inter coding block. In this case, an intra prediction mode for the inter coding block may be transferred from the reference block for the inter coding block.

In the embodiment, for the current block located at the upper boundary of the CTU, prediction blocks at 5 neighbouring positions of the current block are also accessed in the above order, to obtain intra prediction modes for the prediction blocks. Selection is performed on the intra prediction modes for the prediction blocks, and accessing prediction blocks on the upper left, upper, and upper right are skipped.

After selecting non-repeated intra prediction modes in sequence according to the intra prediction modes for the prediction blocks at 5 neighbouring positions of the current block to fill the prediction mode candidate list, an extension operation for angular modes can be performed directly, or one or both of the following selection operations can be performed first: 1) two intra prediction modes are derived based on reconstructed values around the current block and the gradient histogram for DIMD, and the mode(s) that is not a repeated mode of any existing mode in the list is selected from the two derived intra prediction modes and filled into the candidate list. 2) When intra prediction modes selected from the candidate list do not include the DC mode, the DC mode is selected and filled into the candidate list.

Then, the extension operation for angular modes is performed on the modes that have been filled into the list. Specifically, the +/-1 operation is performed on all the selected angular modes in sequence, and non-repeated extended angular modes are selected and filled into the prediction mode candidate list in sequence. If the number of modes filled in the candidate list reaches 6, filling is stopped.

The specific process of the +/-1 operation is illustrated in the following table:

| numCands = modeIdx | Record the total number of prediction modes for 5 neighbouring prediction blocks |
|---|---|
| if(numCands > 0 && ! (numCands == 1 && mpm[0] == DC_IDX)){ | If there are more than 0 angular modes, then further attempt to perform the +/-1 operation on angular modes; otherwise, skip the +/-1 operation |
| for(i = 0; i < numCands && modeIdx < MPM_SIZE; i++){ | The loop starts from the first filled mode and continues until all modes are processed or the prediction mode candidate list is filled up |
| if(mpm[i] <= DC_IDX) | If the mode filled is not an angular mode, skip the +/-1 operation |
| continue | |
| mpm[modeIdx] = ((mpm[i] + offset) % mod) + 2 | Obtain "the i-th filled angular mode - 1". If "angular mode - 1" is less than angular mode 2, select an angular mode in the opposite direction of "angular mode - 1" . |
| if (isInclude(mpm[modeIdx])) | |
| isInclude(mpm[modeIdx++]) = true | If "angular mode - 1" is not a repeated mode of any filled angular mode, fill "angular mode - 1" into the prediction mode candidate list and update the list to not include a repeated mode(s) |
| if(modeIdx >= MPM_SIZE) | If the prediction mode candidate list is |
| | filled up, stop filling |
| break | |
| mpm[modeIdx] = ((mpm[i] -1) % mod) + 2 | Obtain "the i-th filled angular mode + 1". If "angular mode + 1" is greater than angular mode 66, select an angular mode in the opposite direction of "angular mode + 1" |
| if (isInclude(mpm[modeIdx])) | |
| isInclude(mpm[modeIdx++]) = true | If "angular mode + 1" is not a repeated mode, fill "angular mode + 1" into the list and update the list to not include a repeated mode(s). |
| } | |
| } | |
| ... ... | If the list is not filled up, fill the list with a default mode(s) |

The above "angular mode - 1" refers to an angular mode obtained by subtracting 1 from an index of a filled angular mode. For example, if the filled angular mode is mode 3, "angular mode - 1" is angular mode 2. The above "angular mode + 1" refers to an angular mode obtained by adding 1 to an index of a filled angular mode. For example, if the filled angular mode is mode 3, "angular mode - 1" is angular mode 4.

If "angular mode - 1" is less than angular mode 2, for example, if "angular mode - 1" is angular mode 1 (indexes of angular modes are numbered from 2, and angular mode 1 does not exist), then an angular mode in the opposite direction of "angular mode - 1" is selected. Assuming that there are 65 angular modes, in this case, the angular mode in the opposite direction is angular mode 66. If "angular mode + 1" is greater than angular mode 66, then an angular mode in the opposite direction of "angular mode + 1" is selected in a similar way. For example, if a filled angular mode is angular mode 66, then "angular mode + 1" does not exist, in this case, the angular mode in the opposite direction of "angular mode + 1" is angular mode 2.

Regarding extension on angular modes, the +/-1 operation is performed on angular modes. In other embodiments, the +/-1 operation can be expanded to the operation of "+/-X". Assuming that X=3, the "+/-1", "+/-2", "+/-3" operations can be performed on angular modes until the prediction mode candidate list is filled up. As illustrated in the following table, delta = 1, 2, ... X-1.

| numCands = modeIdx | Record the total number of prediction modes for 5 neighbouring blocks |
|---|---|
| if( numCands > 0 && !(numCands = 1 && mpm[0] == DC_IDX)){ | If there are more than 0 angular mode, further attempt to perform the +/-1 operation, otherwise skip the +/- 1 operation. |
| for(delta = 0; delta < X && modeIdx < MPM_SIZE; delta++){ | Increase loop to fill the list one by one from "+/-1" to "+/-N" |
| for(i = 0; i < numCands && modeIdx < MPM_SIZE; i++){ | Start looping from the first filled mode |
| if(mpm[i] <= DC_IDX) | If the filled mode is not an angular mode, skip the +/-1 operation. |
| continue | |
| mpm[modeIdx] = ((mpm[i] + offset-delta) % mod) + 2 | Obtain "the i-th filled angular mode - (1+delta). If "angular mode - (1+delta) is less than angular mode 2, select an angular mode in the opposite direction of "angular mode - (1+delta)" |
| if (isInclude(mpm[modeIdx])) | |
| isInclude(mpm[modeIdx++]) = true | If "angular mode - (1+delta)" is not a repeated mode, fill "angular mode - (1+delta)" into the list and update the list to not include a repeated mode(s) |
| if(modeIdx >= MPM_SIZE) | If the candidate list is filled up, stop filling |
| break | |
| mpm[modeIdx] = ((mpm[i] -1 + delta) % mod) + 2 | Obtain "the ith filled angular mode + (1+delta). If "angular mode + (1+delta)" is greater than angular mode 66, select an angular mode in the opposite direction of "angular mode + (1+delta)" |
| if (isInclude(mpm[modeIdx])) | |
| isInclude(mpm[modeIdx++]) = true | If "angular mode + (1+delta)" is not a |
| | repeated mode, fill "angular mode + (1+delta)" into the list and update the list to not include a repeated mode(s) |
| } | |
| } | |
| } | |
| ... ... | If the list is not filled up, fill the list with a default mode(s) |

In another embodiment of the present disclosure, the extension operation on angular modes includes the +/-1 operation, the +/-2 operation, the +/-3 operation, and the +/-4 operation. Assuming that there are 4 angular modes selected in step 1, an exemplary setting order may be: performing the +/-1 operation on the first angular mode selected (referred to as the first angular mode), performing the +/-1 operation on the second angular mode selected (referred to as the second angular mode), performing the +/-1 operation on the third angular mode selected (referred to as the third angular mode), performing the +/-1 operation on the fourth angular mode selected (referred to as the fourth angular mode), performing the +/-2 operation on the first angular mode, performing the +/-2 operation on the second angular mode, performing the +/-2 operation on the third angular mode, and performing the +/-2 operation on the fourth angular mode, and then, further performing +/-3 operation on the first angular mode to the fourth angular mode, and then performing the +/-4 operation on the first angular mode to the fourth angular mode. During the extension process for angular modes in the present embodiment, after completing the extension operation on each angular mode, two extended angular modes obtained can be compared with all the selected angular modes, and an angular mode(s) that is different from all the selected angular modes can be selected, and the total number of selected intra prediction modes is updated. When the total number is equal to M, the construction of the intra prediction mode candidate list is completed, that is, the process of selecting M intra prediction modes is completed.

If the prediction mode candidate list is still not filled up after performing the extension operation on angular modes that have been filled into the list, the prediction mode candidate list is filled with non-repeated modes in a predefined mode set until the prediction mode candidate list is filled up. The mode set includes some angular modes selected according to statistical rules, as follows: mpm_default [] = {DC_IDX, VER_IDX, HOR_IDX, VER_IDX - 4, VER_IDX + 4, 14, 22, 42, 58, 10, 26, 38, 62, 6, 30, 34, 66, 2, 48, 52, 16}, where DC_IDX represents the DC mode, VER_IDX represents a vertical mode, HOR_IDX represents a horizontal mode, and the remaining numbers represent angular modes corresponding to the numbers.

In the embodiment, the length of the prediction mode candidate list is 6. For reasons of performance, more angular modes can be tried, i.e., the length is set to a value greater than 6, such as 8, 10, 12, 14, etc., or for reducing complexity, fewer modes can be tried, i.e., the length is set to a value less than 6.

In the embodiment, for determining candidate intra prediction modes, the planar mode and the DC mode can be excluded, or only the planar mode is excluded. However, if the complexity is not considered, the two modes may not be excluded, that is, the planar mode, the DC mode, and all angular modes may all be used as candidate intra prediction modes to participate in combination with extended reference lines.

Compared with directly using the first N intra prediction modes in the MPM list and the secondary MPM list, by means of the intra prediction mode candidate list constructed by the above steps in the embodiment, the current block at the upper boundary of the CTU is not restricted from accessing the upper prediction block, and thus the diversity of the candidate list constructed for the current block is increased in the case where the current block is at the upper boundary of the CTU. In addition, by adding DIMD and DC modes, the diversity of intra prediction modes in the candidate list can be further increased.

■ Construct the TMRL_IP mode candidate list

After determining candidate extended reference lines and candidate intra prediction modes, all combinations of extended reference lines in an extended reference line list and prediction modes in a prediction mode candidate list can be tried one by one, and prediction on a template region in reference line 0 (the template as illustrated in the figure below) is performed based on each of the combinations, as illustrated in FIG. 8A. A difference between a reconstructed value of the template region and a prediction value obtained by prediction based on each combination is calculated, and K combinations corresponding to the lowest differences are filled into the TMRL_IP mode candidate list in ascending order of differences.

In the prediction process of the embodiment, the use of the TMRL_IP mode is restricted when the current block is located in the first line of the CTU. When the current block is located at the left boundary of the picture, the TMRL_IP mode can still be used. In this case, since reference line 0 on the left is already located outside the boundary of the picture, no prediction on the left template is performed, that is, prediction is performed on only the upper template region.

The process of prediction on the template region can be completely consistent with other normal intra angle prediction processes, that is, a reconstructed value of a reference line is first filtered and then used as the initial prediction value of the template region. After prediction on the template region is performed based on the filtered reconstructed value of the reference line and the intra prediction mode in the combination, 4 or 6 tap filtering is performed on the initial prediction result and then the filtered initial prediction result is used as the prediction value. Considering the complexity of the operation, the filtering on the reconstructed value of the reference line can be omitted, and a filter with a relatively short tap can be used. In the embodiment, for obtaining the prediction value of the template region through prediction, the reconstructed value of the reference line pixel is not filtered, and the initial prediction result is filtered with a 4-tap interpolation filter with a precision of 1/32 at a non-integer angle. The 4 tap filter is as follows:

| Fractional sample position p | fC interpolation filter coefficients | | | |
|---|---|---|---|---|
| | fC[p] [0] | fC[p][1] | fC[p][2] | fC[p][3] |
| 0 | 0 | 64 | 0 | 0 |
| 1 | -1 | 63 | 2 | 0 |
| 2 | -2 | 62 | 4 | 0 |
| 3 | -2 | 60 | 7 | -1 |
| 4 | -2 | 58 | 10 | -2 |
| 5 | -3 | 57 | 12 | -2 |
| 6 | -4 | 56 | 14 | -2 |
| 7 | -4 | 55 | 15 | -2 |
| 8 | -4 | 54 | 16 | -2 |
| 9 | -5 | 53 | 18 | -2 |

(continued)

| Fractional sample position p | fC interpolation filter coefficients | | | |
| --- | --- | --- | --- | --- |
| | fC[p] [0] | fC[p][1] | fC[p][2] | fC[p][3] |
| 10 | -6 | 52 | 20 | -2 |
| 11 | -6 | 49 | 24 | -3 |
| 12 | -6 | 46 | 28 | -4 |
| 13 | -5 | 44 | 29 | -4 |
| 14 | -4 | 42 | 30 | -4 |
| 15 | -4 | 39 | 33 | -4 |
| 16 | -4 | 36 | 36 | -4 |
| 17 | -4 | 33 | 39 | -4 |
| 18 | -4 | 30 | 42 | -4 |
| 19 | -4 | 29 | 44 | -5 |
| 20 | -4 | 28 | 46 | -6 |
| 21 | -3 | 24 | 49 | -6 |
| 22 | -2 | 20 | 52 | -6 |
| 23 | -2 | 18 | 53 | -5 |
| 24 | -2 | 16 | 54 | -4 |
| 25 | -2 | 15 | 55 | -4 |
| 26 | -2 | 14 | 56 | -4 |
| 27 | -2 | 12 | 57 | -3 |
| 28 | -2 | 10 | 58 | -2 |
| 29 | -1 | 7 | 60 | -2 |
| 30 | 0 | 4 | 62 | -2 |
| 31 | 0 | 2 | 63 | -1 |

A suitable filter is selected based on the position deviation between samples of lines at the current angle. The process of deriving deviation iFact is as follows: according to the correspondence between traditional angles and wide angles, predModeIntra is obtained, and intraPredAngle is obtained by looking up a table according to predModeIntra, where the table is as follows:

| predModeIntra | -14 | -13 | -12 | -11 | -10 | -9 | -8 | -7 | -6 | -5 | -4 | -3 | -2 | -1 | 2 | 3 | 4 |
|---|---|---|---|---|---|---|---|---|---|---|---|---|---|---|---|---|---|
| intraPredAngle | 512 | 341 | 256 | 171 | 128 | 102 | 86 | 73 | 64 | 57 | 51 | 45 | 39 | 35 | 32 | 29 | 26 |
| predModeIntra | 5 | 6 | 7 | 8 | 9 | 10 | 11 | 12 | 13 | 14 | 15 | 16 | 17 | 18 | 19 | 20 | 21 |
| intraPredAngle | 23 | 20 | 18 | 16 | 14 | 12 | 10 | 8 | 6 | 4 | 3 | 2 | 1 | 0 | -1 | -2 | -3 |
| predModeIntra | 22 | 23 | 24 | 25 | 26 | 27 | 28 | 29 | 30 | 31 | 32 | 33 | 34 | 35 | 36 | 37 | 38 |
| intraPredAngle | -4 | -6 | -8 | -10 | -12 | -14 | -16 | -18 | -20 | -23 | -26 | -29 | -32 | -29 | -26 | -23 | -20 |
| predModeIntra | 39 | 40 | 41 | 42 | 43 | 44 | 45 | 46 | 47 | 48 | 49 | 50 | 51 | 52 | 53 | 54 | 55 |
| intraPredAngle | -18 | -16 | -14 | -12 | -10 | -8 | -6 | -4 | -3 | -2 | -1 | 0 | 1 | 2 | 3 | 4 | 6 |
| predModeIntra | 56 | 57 | 58 | 59 | 60 | 61 | 62 | 63 | 64 | 65 | 66 | 67 | 68 | 69 | 70 | 71 | 72 |
| intraPredAngle | 8 | 10 | 12 | 14 | 16 | 18 | 20 | 23 | 26 | 29 | 32 | 35 | 39 | 45 | 51 | 57 | 64 |
| predModeIntra | 73 | 74 | 75 | 76 | 77 | 78 | 79 | 80 | | | | | | | | | |
| intraPredAngle | 73 | 86 | 102 | 128 | 171 | 256 | 341 | 512 | | | | | | | | | |

iFact is determined by intraPredAngle and an index of a selected reference line refIdx, where iFact = ((x+1+refIdx) * intraPredAngle) & 31

Finally, prediction on the template region is performed based on an angle and a reference line in the current combination and the filter. SADs between prediction values of the template region obtained through prediction and the reconstructed value of the template region are calculated and sorted in ascending order of the SADs, and K combinations with the lowest SADs are selected and filled into the TMRL_IP mode candidate list.

A fast algorithm can be used in the sorting process. In the above process, 5 reference lines and 6 prediction modes with a total of 30 combinations need to be tried, but only K combinations with the lowest SADs need to be selected. In the embodiment, after prediction based on the first K combinations is completed and corresponding SADs are obtained, starting from the (K+1)-th combination, only K combinations with the lowest differences (also called cost) need to be retained and used for updating. Starting from the (K+1)-th combination, prediction is performed on only the upper template region and a corresponding SAD is calculated. When the SAD calculated based on the upper template is larger than the largest difference corresponding to a combination among the K combinations with the lowest differences, the prediction and difference calculation for the left template region can be skipped. For details, reference can be made to the above embodiment.

The value of K in the embodiment is the same as that at the encoding end, that is, K = 12. However, in another embodiment of the present disclosure, K is determined according to the TMRL_IP mode index. When the TMRL_IP mode index indicates that the selected combination of an extended reference line and an intra prediction mode is located at the L-th position in the candidate list (that is, the selected combination is the L-th combination in the candidate list), K = L. If L' is used to represent the value of the TMRL_IP mode index, $0 \leq L' < K$, then L = L' + 1. When L is smaller than 12 (the value of K set at the encoding end), it is not necessary to sort out 12 combinations with the lowest cost from the N x M combinations, but only L combinations with the lowest cost need to be sorted out. The decoding end determines the value of K according to the TMRL_IP mode index, which can reduce the complexity of sorting at the decoder.

Step 3, the combination of an extended reference line and an intra prediction mode selected for the current block is determined according to the constructed TMRL_IP mode candidate list and the TMRL_IP mode index obtained by decoding, and intra prediction is performed on the current block according to the selected combination.

When the TMRL_IP mode is used, refIdx and predModeIntra define the mode used for intra prediction, and are determined according to the TMRL_IP mode index "tmrl_idx" and the TMRL_IP mode candidate list.

For the ECM-4.0 reference software, by means of the method described in the embodiment, and the setting of N = 5 (5 extended reference lines are reference lines 1, 3, 5, 7, 12, respectively), M = 6 (6 predefined prediction modes, not including the planar mode and the DC mode), and K = 12 (12 combinations with small SADs among all the combinations are merely selected), the measurement results under the AI configuration are as follows:

| | All Intra Main 10 | | | | |
|---|---|---|---|---|---|
| | Over ECM | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.07% | -0.07% | -0.02% | 105% | 108% |
| Class C | -0.12% | -0.08% | -0.01% | 105% | 110% |
| Class E | -0.09% | -0.05% | 0.14% | 105% | 111% |
| **Overall** | #VALUE! | #VALUE! | #VALUE! | #DIV/0! | #DIV/0! |
| Class D | -0.08% | 0.08% | -0.17% | 104% | 113% |
| Class F | #VALUE! | #VALUE! | #VALUE! | #NUM! | #NUM! |
| Class TGM | #VALUE! | #VALUE! | #VALUE! | #DIV/0! | #DIV/0! |

By means of the setting of N = 5 (5 extended reference lines are reference lines 1, 3, 5, 7, 12, respectively), M = 8 (8 predefined prediction modes), and K = 16, the measurement results under the AI configuration are as follows:

| | All Intra Main 10 | | | | |
|---|---|---|---|---|---|
| | Over ECM | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.08% | -0.04% | -0.05% | 105% | 110% |
| Class C | -0.13% | -0.09% | -0.05% | 104% | 110% |
| Class E | -0.11% | 0.10% | -0.08% | 106% | 116% |
| **Overall** | #VALUE! | #VALUE! | #VALUE! | #DIV/0! | #DIV/0! |
| Class D | -0.08% | 0.18% | -0.02% | 104% | 115% |
| Class F | -0.12% | -0.06% | -0.01% | 111% | 116% |

By means of the setting of N = 5 (5 extended reference lines are reference lines 1, 3, 5, 7, 12, respectively), M = 12 (12 predefined prediction modes), and K = 24, the measurement results under the AI configuration are as follows:

| | All Intra Main 10 | | | | |
|---|---|---|---|---|---|
| | Over ECM | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.08% | -0.04% | -0.07% | 108% | 114% |
| Class C | -0.16% | -0.20% | -0.12% | 106% | 118% |
| Class E | -0.12% | 0.02% | -0.07% | 107% | 115% |
| **Overall** | #VALUE! | #VALUE! | #VALUE! | #DIV/0! | #DIV/0! |
| Class D | -0.11% | 0.03% | -0.10% | 105% | 117% |
| Class F | -0.13% | -0.10% | -0.10% | #NUM! | #NUM! |

By means of the setting of N = 5 (5 extended reference lines are reference lines 1, 3, 5, 7, 12, respectively), M = 8 (8 predefined prediction modes, not including the planar mode and the DC mode), and K = 16, the measurement results under the AI configuration are as follows:

| | All Intra Main 10 | | | | |
|---|---|---|---|---|---|
| | Over ECM | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.09% | -0.06% | -0.02% | 107% | 112% |
| Class C | -0.17% | -0.06% | -0.13% | 105% | 115% |
| Class E | -0.08% | 0.14% | 0.03% | 106% | 114% |
| **Overall** | #VALUE! | #VALUE! | #VALUE! | #DIV/0! | #DIV/0! |
| Class D | -0.08% | 0.18% | -0.21% | 104% | 118% |
| Class F | -0.06% | -0.09% | -0.18% | #NUM! | #NUM! |

The meanings of the parameters in the table are as follows.

EncT: encoding time, 10X% means that when the technology for sorting reference lines is integrated, the encoding time is 10X% compared with the encoding time before the integration, which means that the encoding time increases by X%.

DecT: decoding time, 10X% means that when the technology for sorting reference lines is integrated, the decoding time is 10X % compared with the decoding time before the integration, which means that the decoding time increases by X%.

ClassAI and ClassA2 are test video sequences with a resolution of 3840 x 2160, ClassB is a test sequence with a resolution of 1920 x 1080, ClassC is a test sequence with a resolution of 832 x 480, ClassD is a test sequence with a resolution of 416 x 240, and ClassE is a test sequence with a resolution of 1280 x 720; ClassF represents several screen content sequences with different resolutions.

Y, U, and V represent three colour components. The columns where Y, U, and V are located represent Bjontegaard-Delta rate (BD-rate) indicators of the test results on Y, U, and V The smaller the value, the better the performance of coding.

All intra represents the test configuration of all intra configuration.

By means of the setting of N = 5 (5 extended reference lines are reference lines 1, 3, 5, 7, 12, respectively), M = 10 (10 predefined prediction modes), and K = 20, and by means of that the first M prediction modes in the MPM list and the secondary MPM list are used to participate in combination to construct the candidate list, the test results under the configuration of All intra and random access are illustrated as follows:

| | All Intra Main 10 | | | | |
|---|---|---|---|---|---|
| | Over ECM-5.0 | | | | |
| | Y | U | V | EncT | DecT |
| Class A1 | -0.02% | 0.13% | 0.06% | 102% | 101% |
| Class A2 | -0.06% | -0.07% | -0.08% | 102% | 106% |
| Class B | -0.06% | -0.04% | -0.01% | 101% | 104% |
| Class C | -0.12% | -0.09% | -0.08% | 102% | 107% |
| Class E | -0.14% | 0.04% | -0.09% | 103% | 108% |
| **Overall** | -0.08% | -0.01% | -0.04% | 102% | 105% |
| Class D | -0.11% | 0.05% | -0.09% | 102% | 108% |
| Class F | -0.12% | 0.03% | -0.08% | 103% | 107% |

| | Random Access Main 10 | | | | |
|---|---|---|---|---|---|
| | Over ECM-5.0 | | | | |
| | Y | U | V | EncT | DecT |
| Class A1 | -0.01% | -0.09% | -0.10% | 101% | 101% |
| Class A2 | -0.05% | -0.01% | -0.13% | 101% | 101% |
| Class B | -0.02% | -0.21% | -0.13% | 100% | 100% |
| Class C | -0.04% | 0.03% | -0.17% | 100% | 101% |
| Class E | | | | | |
| **Overall** | -0.03% | -0.08% | -0.13% | 101% | 101% |
| Class D | -0.03% | -0.01% | 0.09% | 100% | 98% |
| Class F | 0.00% | -0.03% | -0.07% | 102% | 102% |

Under the same setting of N = 5, M = 10, K = 20, but using the method of the embodiment to construct the candidate list (including allowing the current block at the upper boundary of the CTU to access prediction blocks at the upper, upper right and upper left positions adjacent to the current block, performing selection on the DIMD-derived modes and the DC mode before angle extension, and performing extension operations on all selected angular modes, etc.), the test results under the AI configuration are illustrated in Table B as follows:

| | All Intra Main 10 | | | | |
|---|---|---|---|---|---|
| | Over 20220720-ECM6.0-rc2 | | | | |
| | Y | U | V | EncT | DecT |
| Class A1 | -0.04% | 0.02% | 0.12% | 101% | 106% |
| Class A2 | -0.08% | -0.21% | -0.09% | 100% | 102% |
| Class B | -0.08% | -0.06% | -0.07% | 100% | 105% |
| Class C | -0.16% | -0.13% | -0.07% | 100% | 102% |
| Class E | -0.17% | -0.12% | -0.25% | 99% | 101% |
| **Overall** | -0.11% | -0.10% | -0.07% | 100% | 103% |
| Class D | -0.12% | 0.04% | -0.08% | 102% | 102% |
| Class F | -0.15% | -0.13% | -0.02% | 100% | 104% |

| | Random Access Main 10 | | | | |
|---|---|---|---|---|---|
| | Over 20220720-ECM6.0-rc2 | | | | |
| | Y | U | V | EncT | **DecT** |
| Class A1 | -0.05% | 0.15% | -0.08% | 101% | 99% |
| Class A2 | -0.03% | -0.06% | 0.02% | 101% | 97% |
| Class B | -0.05% | 0.20% | 0.00% | 102% | 104% |
| Class C | -0.06% | -0.11% | -0.19% | 99% | 98% |
| Class E | | | | | |
| **Overall** | -0.05% | 0.05% | -0.06% | 101% | 100% |
| Class D | -0.02% | 0.17% | -0.13% | 98% | 93% |
| Class F | -0.04% | -0.09% | -0.05% | 102% | 100% |

By comparison, it can be found that in the column of overall, compared with the reference software, directly using the first M prediction modes in the MPM list and the secondary MPM list to participate in combination can save 0.08%/0.01%/0.04% BD - rates of Y/U/V under the configuration of all intra, and 0.03 %/0.08%/0.13% BD - rates of Y /U/V under the configuration of random access. Compared with the reference software, using the method of this embodiment to construct the candidate list can save 0.11 %/0.10%/0.07% BD - rates of Y/U/V under the configuration of all intra, and 0.05%/-0.05%/0.06% BD - rates of Y /U/V under the configuration of random access. The overall effect is improved.

It can be seen that, using the TMRL_IP mode of this embodiment for intra prediction encoding and decoding can significantly improve performance of encoding.

In the embodiment, for extended reference lines or prediction modes, a template region of 1 row and 1 column is used, and extended reference lines or prediction modes are sorted and screened in ascending order of SADs. For extended reference lines, if all the extended reference lines (including reference line 1) are sorted, only a template of 1 row and 1 column can be used. However, for the screening of prediction modes, in order to screen out more suitable prediction modes, similar to the TIMD mode, more reference lines can be used to obtain more accurate results. In other embodiments, the manner for determining prediction modes in the TMRL_IP mode candidate list can also be changed.

For example, when a prediction mode candidate list of a length of 6 needs to be constructed, a list of a length greater than 6 can be first constructed according to the same construction and filling methods as in the embodiment, and then 4 rows and 4 columns closest to the current block are used as a template, and prediction on the template is performed using the 5-th reference line and an intra prediction mode in the prediction mode candidate list, and the differences (SADs or SATDs) between prediction values obtained by prediction and the reconstructed value of the template are calculated and sorted in ascending order, and 6 intra prediction modes with small differences are selected as intra prediction modes in the to - be - constructed TMRL_IP mode candidate list of a length of 6. In addition, the length of the TMRL_IP mode candidate list being 6 is only an example, and the length can be adjusted according to the situation.

In the embodiment, 65 angular modes are taken as an example, but in other embodiments, angular modes can be extended to 129 angular modes or more angular modes to achieve better performance. In the case where angular modes are extended to more angular modes, the number of filters for intra prediction also needs to be increased accordingly. For example, when there are 129 angular modes, filtering of a precision of 1/64 is used.

An embodiment of the present disclosure further provides a bitstream, where the bitstream includes block-level syntax elements for intra prediction. The syntax elements include an MRL_IP mode flag and an MRL_IP mode index for the current block, where the MRL_IP mode flag indicates whether an MRL_IP mode is used for the current block, and the MRL_IP mode index indicates the position of a combination of an extended reference line and an intra prediction mode selected for the current block in an MRL_IP mode candidate list. The bitstream of the embodiment can be generated by the video encoding method of any embodiment of the present disclosure.

An embodiment of the present disclosure further provides an apparatus for constructing an MRL_IP mode candidate list. As illustrated in FIG. 10, the apparatus includes a processor 71 and a memory 73 storing a computer program, where the processor 71, when executing the computer program, can implement the method for constructing an MRL_IP mode candidate list as described in any embodiment of the present disclosure.

An embodiment of the present disclosure further provides a video decoding apparatus. As illustrated in FIG. 10, the apparatus includes a processor and a memory storing a computer program, where the processor, when executing the computer program, can implement the video decoding method as described in any embodiment of the present disclosure.

An embodiment of the present disclosure further provides a video encoding apparatus. As illustrated in FIG. 10, the apparatus includes a processor and a memory storing a computer program, where the processor, when executing the computer program, can implement the video encoding method as described in any embodiment of the present disclosure.

The processor of the above-mentioned embodiments of the present disclosure may be a general-purpose processor, including a central processing unit (CPU), a network processor (NP for short), a microprocessor, etc., or other conventional processors, etc. The processor may also be a digital signal processor (DSP), an application-specific integrated circuit (ASIC), a field programmable gate array (FPGA), discrete logic or other programmable logic devices, discrete gate or transistor logic devices, discrete hardware components, or other equivalent integrated or discrete logic circuits, or a combination of the above devices. That is, the processor of the above-mentioned embodiments may be any processing device or device combination that can implement various methods, steps, and logic block diagrams disclosed in the embodiments of the present disclosure. If the embodiments of the present disclosure are partially implemented in software, the instructions for the software may be stored in a suitable non-volatile computer-readable storage medium, and one or more processors in hardware may be used to execute the instructions to implement the methods of the embodiments of the present disclosure. The term "processor" used herein may refer to the above-mentioned structure or any other structure suitable for implementing the technology described herein.

An embodiment of the present disclosure further provides a video encoding and decoding system, which includes the video encoding apparatus described in any embodiment of the present disclosure and the video decoding apparatus described in any embodiment of the present disclosure.

An embodiment of the present disclosure further provides a non-volatile computer-readable storage medium, where the computer-readable storage medium stores a computer program. The computer program, when executed by a processor, implements a method for constructing an MRL_IP mode candidate list as described in any embodiment of the present disclosure, or implements a video decoding method as described in any embodiment of the present disclosure, or implements a video encoding method as described in any embodiment of the present disclosure.

In one or more of the above exemplary embodiments, the functions described may be implemented in hardware, software, firmware, or any combination thereof. If implemented in software, the functions as one or more instructions or codes may be stored in a computer-readable medium or transmitted via a computer-readable medium, and executed by a hardware-based processing unit. The computer-readable medium may include a tangible medium such as a data storage medium, or any communication medium that facilitates a computer program being transmitted from one place to another according to a communication protocol for example. In this way, the computer-readable medium may be generally a non-transitory tangible computer-readable storage medium or a communication medium such as a signal or carrier wave. A data storage medium may be any available medium that can be accessed by one or more computers or one or more processors to retrieve instructions, codes, and/or data structures for implementing the technology described in the present disclosure. A computer program product may include a computer-readable medium.

By way of example and not limitation, such computer-readable storage media may include a random access memory (RAM), a read only memory (ROM), an electrically erasable programmable read only memory (EEPROM), a compact disk ROM (CD-ROM) or other optical disk storage devices, magnetic disk storage devices or other magnetic storage devices, a flash memory, or any other medium that can be used to store desired program codes in the form of instructions or data structures and can be accessed by a computer. Moreover, any connection may also be referred to as a computer-readable medium. For example, if instructions are transmitted from a website, server, or other remote source using a coaxial cable, a fiber optic cable, a twisted pair, a digital subscriber line (DSL), or wireless technology such as infrared, radio, and microwaves, then the coaxial cable, the fiber optic cable, the twisted pair, the DSL, or the wireless technology such as infrared, radio, and microwaves are included in the definition of medium. However, it may be understood that the computer-readable storage medium and data storage medium do not include connection, carrier, signal, or other transitory media, but are directed to a non-transitory tangible storage medium. As used herein, disks and optical disks include CDs, laser optical disks, optical disks, digital versatile disks (DVDs), floppy disks, or Blu-ray disks, etc., where disks typically reproduce data magnetically, and optical disks use lasers to reproduce data optically. Combinations of the above shall also be included within the scope of the computer-readable medium.

In some aspects, the functionality described herein may be provided within dedicated hardware and/or software modules configured for encoding and decoding, or incorporated into a combined codec. Also, the techniques may be fully implemented in one or more circuits or logic elements.

The technical solutions of the embodiments of the present disclosure can be implemented in a wide variety of devices or equipment, including wireless mobile phones, integrated circuits (ICs) or a group of ICs (e.g., chipsets). Various components, modules, or units are described in the embodiments of the present disclosure to emphasize the functional aspects of the devices configured to perform the described techniques, but they do not necessarily need to be implemented by different hardware units. Instead, as described above, in the encoder and decoder, various units can be combined in a hardware unit or provided by a collection of interoperable hardware units (including one or more processors as described above) in combination with suitable software and/or firmware.

**Claims**

1. A construction method for a multiple reference line intra prediction (MRL_IP) mode candidate list, comprising:

   obtaining $N \times M$ combinations of extended reference lines and intra prediction modes according to N extended reference lines and M intra prediction modes for a current block, wherein $N \geq 1$, $M \geq 1$, and $N \times M \geq 2$;
   performing prediction on a template region for the current block according to each of the $N \times M$ combinations, and calculating differences between a reconstructed value of the template region and prediction values obtained by prediction; and
   filling K combinations corresponding to the differences into a template-based MRL_IP (TMRL_IP) mode candidate list for the current block in ascending order of the differences, wherein $1 \leq K \leq N \times M$.

2. The construction method according to claim 1, wherein

   the template region for the current block is located in a reference line closest to the current block; or
   the template region for the current block is located in multiple reference lines closest to the current block, wherein the N extended reference lines are extended reference lines located outside the template region.

3. The construction method according to claim 1, wherein
the difference is expressed as the sum of absolute difference differences (SAD), or as the sum of absolute transformed differences (SATD).

4. The construction method according to claim 1, wherein

   the N extended reference lines for the current block are extended reference lines located outside the template region for the current block and not exceeding a boundary of a coding tree unit (CTU) among $N_{max}$ predefined extended reference lines;
   wherein $N_{max}$ is the maximum number of extended reference lines available for a TMRL_IP mode.

5. The construction method according to claim 4, wherein
the $N_{max}$ extended reference lines comprise:

   5 extended reference lines with indexes of {1, 3, 5, 7, 12}; or
   5 extended reference lines with indexes of {2, 3, 5, 7, 12}; or
   $N_{max}$ extended reference lines closest to the current block, with indexes starting from 1; or
   $N_{max}$ extended reference lines closest to the current block, with odd indexes starting from 1; or
   $N_{max}$ extended reference lines closest to the current block, with even indexes starting from 2.

6. The construction method according to claim 1, wherein
the M intra prediction modes are selected by the following process:

   step 1: determining intra prediction modes for prediction blocks at multiple neighbouring positions around the current block, selecting in sequence intra prediction modes that are allowed to be selected, and removing repeated modes;
   ending the process when the number of the intra prediction modes selected in step 1 is equal to M; proceeding to step 2 when the number of the intra prediction modes selected in step 1 is less than M and the intra prediction modes selected in step 1 include an angular mode; and
   step 2, obtaining extended angular modes by performing an extension operation on angular modes in sequence starting from a first angular mode that has been selected, and selecting an extended angular mode that is different from all selected angular modes until the total number of selected intra prediction modes is equal to M.

7. The construction method according to claim 6, wherein
in step 1, for a current block located at an upper boundary of a CTU and a current block not located at the upper boundary of the CTU, prediction blocks at multiple neighbouring positions around the current block comprise some or all of the following: a prediction block on the left of the current block, a prediction block on the upper of the current block, a prediction block on the upper left of the current block, a prediction block on the bottom left of the current block, and a prediction block on the upper right of the current block, wherein $M \geq 5$.

8. The construction method according to claim 6 or 7, wherein:
in the case where the number of intra prediction modes selected based on the intra prediction modes for the prediction blocks at the multiple neighbouring positions around the current block is less than M, step 1 further comprises: continuing to select an intra prediction mode for participating in combination in at least one of the following:

   deriving two intra prediction modes using a gradient histogram for decoder-side intra mode derivation (DIMD) according to reconstructed values around the current block, and selecting from the two derived intra prediction modes an intra prediction mode that is different from all the selected intra prediction modes; and
   selecting a direct current (DC) mode when the selected intra prediction modes do not comprise the DC mode.

9. The construction method according to claim 6, wherein:
in step 2, for all the angular modes selected in step 1, starting from the first angular mode selected, performing the following processing in sequence according to a set order: performing an extension operation on an angular mode to obtain an extended angular mode, and selecting the extended angular mode when the extended angular mode is different from all the selected angular modes; ending the process when the total number of selected intra prediction modes is equal to M; wherein the number of all the angular modes selected in step 1 is greater than or equal to 1 and less than or equal to 5.

10. The construction method according to claim 6, wherein:
the process of selecting the M intra prediction modes further comprises: when no angular mode is selected in step 1, or the total number of the intra prediction modes selected after step 2 is still less than M, performing step 3: determining, from a predefined intra prediction mode set, intra prediction modes allowed to be selected, and sequentially selecting, from the determined intra prediction modes allowed to be selected, intra prediction modes that are different from all the selected intra prediction modes, until the total number of the selected intra prediction modes is equal to M.

11. The construction method according to claim 6 or 10, wherein
the intra prediction modes allowed to be selected comprise only angular modes, or comprise only angular modes and a DC mode, or comprise angular modes, the DC mode, and a planar mode.

12. The construction method according to claim 6, wherein
the extended operation on the angular modes comprises any one or more of the following operations:

an +/-1 operation on the angular modes;
an +/-2 operation on the angular modes;
an +/-3 operation on the angular modes; or
an +/-4 operation on the angular modes.

13. The construction method according to claim 1, wherein

the M intra prediction modes comprise some or all of intra prediction modes except a planar mode in most probable modes (MPMs); or
the M intra prediction modes comprise some or all of intra prediction modes except the planar mode in MPMs and secondary MPMs; or
the M intra prediction modes comprise some or all of the intra prediction modes except the planar mode and a DC mode in the MPMs; or
the M intra prediction modes comprise some or all of the intra prediction modes except the planar mode and the DC mode in the MPMs and the secondary MPMs; or
the M intra prediction modes comprise some or all of the intra prediction modes except the planar mode, the DC mode, and a DIMD mode in the MPMs; or
the M intra prediction modes comprise some or all of the intra prediction modes except the planar mode, the DC mode, and the DIMD mode in the MPMs and the secondary MPMs.

14. The construction method according to claim 1, wherein:
the M intra prediction modes are selected as follows:

selecting M' intra prediction modes;
performing prediction on a template for the current block according to each of reference lines for the current block located outside the template and each of the M' intra prediction modes, and calculating differences between a reconstructed value of the template and prediction values obtained by prediction to obtain M' differences; and selecting M intra prediction modes with lowest differences from the M' intra prediction modes as the M intra prediction modes for participating in combination, wherein M < M'.

15. The construction method according to claim 1, wherein
$N \le N_{max}$, $2 \le N_{max} \le 12$; $2 \le M \le 18$; $K \le K_{max}$, $6 \le K_{max} \le 36$; wherein $N_{max}$ is the maximum number of extended reference lines allowed to be used for a TMRL_IP mode, and $K_{max}$ is the maximum number of candidate combinations allowed to be used for the TMRL_IP mode.

16. The construction method according to claim 1, wherein

N = 5, M = 10, K =20; or
N = 5, M = 6, K = 12; or
N = 5, M = 8, K = 16; or
N = 5, M = 12, K =24.

17. The construction method according to claim 1, wherein:

N, M, and K have at least two sets of values, wherein the first set of values is $N_1$, $M_1$, and $K_1$, and the second set of values is $N_2$, $M_2$, and $K_2$, wherein $N_1 \leq N_2$, $M_1 \leq M_2$, $K_1 \leq K_2$, and $N_1 \times M_1 < N_2 \times M_2$;

the first set of values is used for constructing a candidate list for a current block of a first size, and the second set of values is used for constructing a candidate list for a current block of a second size, wherein the first size is less than the second size.

18. The construction method according to claim 1, wherein
performing prediction on the template region for the current block according to each of the $N \times M$ combinations comprises: when the current block is located at a left boundary of a picture, performing prediction on a template region on an upper side of the current block according to each of the $N \times M$ combinations, and skipping performing prediction on a template region on a left side of the current block.

19. The construction method according to claim 1, wherein:
performing prediction on the template region for the current block according to each of the $N \times M$ combinations comprises: for each of the $N \times M$ combinations, performing prediction in the following manner:

calculating an initial prediction value of the template region according to a reconstructed value of an extended reference line in the combination and an intra prediction mode in the combination, wherein the reconstructed value of the extended reference line is an original reconstructed value of the extended reference line or a filtered reconstructed value of the extended reference line; and
performing 4-tap filtering or 6-tap filtering on the initial prediction value of the template region, and regarding a filtered result as a prediction value of the template region obtained through prediction based on the combination.

20. The construction method according to claim 1, wherein
performing prediction on the template region for the current block according to each of the $N \times M$ combinations, and calculating the differences between the reconstructed value of the template region and the prediction values obtained by prediction, comprises:

obtaining K differences by performing prediction on the entire template region for the current block according to each of K combinations, wherein the K differences form a difference set, and the maximum difference in the difference set is denoted as $D_{max}$;
for each of the remaining combinations, performing prediction on a template region on one side of the current block according to the combination, calculating a difference $D_1$ between a reconstructed value of the template region on the side of the current block and a prediction value of the template region on the side of the current block, completing the prediction based on the combination when $D_1 \geq D_{max}$; when $D_1 < D_{max}$, performing prediction on a template region on another side of the current block according to the combination, and calculating a difference $D_2$ between a reconstructed value of the entire template region for the current block and a prediction value of the entire template region for the current block; when $D_2 < D_{max}$, adding $D_2$ to the difference set, deleting $D_{max}$ from the difference set, and updating $D_{max}$ in the difference set; and completing the prediction based on the combination when $D_2 \geq D_{max}$; and
regarding the K combinations corresponding to the K differences in the difference set as K combinations with lowest differences after the prediction based on each of the $N \times M$ combinations is completed.

21. The construction method according to claim 1, wherein:
filling the K combinations corresponding to the differences into the TMRL_IP mode candidate list for the current block in ascending order of the differences, comprises:

filling the K combinations corresponding to the differences into the candidate list in ascending order of the differences, starting from the first position of the candidate list; or
filling the K combinations corresponding to the differences into the candidate list in ascending order of the differences, starting from the i-th position of the candidate list, wherein one or more combinations of a reference line with an index of 0 and one or more intra prediction modes are filled in the candidate list before the i-th position of the candidate list, wherein $i \geq 2$.

22. A video decoding method, comprising:

determining whether a multiple reference line intra prediction (MRL_IP) mode is used for a current block by decoding an MRL_IP mode flag for the current block;

when the MRL_IP mode is determined to be used for the current block, further decoding an MRL_IP mode index for the current block, and constructing an MRL_IP mode candidate list for the current block, wherein the candidate list is filled with combinations of candidate extended reference lines and candidate intra prediction modes for the current block; and

determining, according to the candidate list and the MRL_IP mode index, a combination of an extended reference line and an intra prediction mode selected for the current block, and performing prediction on a current picture according to the selected combination;

wherein the MRL_IP mode index indicates a position of the selected combination of an extended reference line and an intra prediction mode in the candidate list.

23. The video decoding method according to claim 18, comprising:
wherein the MRL_IP mode candidate list is the TMRL_IP mode candidate list constructed according to the method described in any one of claims 1 to 21, wherein K is a set value, or K is determined according to the TMRL_IP mode index, and when the TMRL_IP mode index indicates that the selected combination of an extended reference line and an intra prediction mode is located at the L-th position in the candidate list, K = L, wherein L is a positive integer.

24. The video decoding method according to claim 22 or 23, comprising:
before decoding the MRL_IP mode flag for the current block, the method further comprises: decoding the MRL_IP mode flag for the current block when all conditions for allowing use of the MRL_IP mode for the current block are met, wherein the conditions for allowing use of the MRL_IP mode comprise any one or more of the following:

the current block is a block in a luma picture;
MRL is allowed for the current block;
the current block is not located at an upper boundary of a coding tree unit (CTU); or
template based intra mode derivation (TIMD) is not used for the current block.

25. The video decoding method according to claim 22, further comprising:
when it is determined that MRL is allowed for the current block, the current block is not located at an upper boundary of a CTU, and TIMD is used for the current block, decoding an MRL index for the current block, wherein the MRL index indicates a position of a reference line selected for the current block in an MRL index list.

26. The video decoding method according to claim 22, comprising:
when it is determined, according to the MRL_IP mode flag, that the MRL_IP mode is used for the current block, the method further comprises: skipping decoding of syntax elements of any one or more of the following: an MPM, an intra sub-partitions (ISP) mode, a multiple transform selection (MTS) mode, a low-frequency non-separable transform (LFNST) mode, or a TIMD mode.

27. A video encoding method, comprising:

constructing a multiple reference line intra prediction (MRL_IP) mode candidate list for a current block, wherein the candidate list is filled with combinations of candidate extended reference lines and candidate intra prediction modes for the current block;

selecting, through rate-distortion optimization, a combination of a reference line and an intra prediction mode for the current block for intra prediction; and

when an encoding condition for an MRL_IP mode for the current block is satisfied, encoding an MRL_IP mode flag for the current block to indicate that the MRL_IP mode is used for the current block, and encoding an MRL_IP mode index for the current block to indicate a position of the selected combination in the candidate list;

wherein the encoding condition at least comprises that: the selected combination is in the candidate list.

28. The video encoding method of claim 27, wherein
the MRL_IP mode candidate list is the TMRL_IP mode candidate list constructed according to the method described in any one of claims 1 to 21, wherein K is a set value.

29. The video encoding method according to claim 27, wherein

the encoding condition further comprises: template based intra mode derivation (TIMD) is not used for the current block;
the method further comprises:

when TIMD is used for the current block, skipping the encoding of the MRL_IP mode flag and the MRL_IP mode index for the current block; and

when TIMD is not used for the current block but the selected combination is not in the candidate list, encoding the MRL_IP mode flag for the current block to indicate that the MRL_IP mode is not used for the current block, and skipping the encoding of the MRL_IP mode index for the current block.

30. The video encoding method according to claim 27, wherein
constructing the MRL_IP mode candidate list for the current block comprises: constructing the candidate list only when all conditions for allowing use of the MRL_IP mode for the current block are met, wherein the conditions for allowing use of the MRL_IP mode comprise any one or more of the following:

the current block is a block in a luma picture;
the current block is not located at an upper boundary of a coding tree unit (CTU);
MRL is allowed for the current block;
the size of the current block is not greater than the maximum size of a current block for which the MRL_IP mode is allowed; or
an aspect ratio of the current block meets a requirement for an aspect ratio of a current block for which the MRL_IP mode is allowed.

31. The video encoding method according to claim 27, wherein:
the MRL_IP mode index is encoded using golomb - rice coding.

32. The video encoding method according to claim 27, comprising:
when the encoding condition for the MRL_IP mode for the current block is satisfied, the method further comprises: skipping decoding of syntax elements of any one or more of the following: an MPM, an intra sub-partitions (ISP) mode, a multiple transform selection (MTS) mode, a low-frequency non-separable transform (LFNST) mode, or a TIMD mode.

33. A bitstream, wherein the bitstream comprises block-level syntax elements for intra prediction, wherein the syntax elements comprise a multiple reference line intra prediction (MRL_IP) mode flag and an MRL_IP mode index for a current block, wherein the MRL_IP mode flag indicates whether an MRL_IP mode is used for the current block, and the MRL_IP mode index indicates the position of a combination of an extended reference line and an intra prediction mode selected for the current block in an MRL_IP mode candidate list.

34. The bitstream according to claim 33, wherein
the bitstream is generated according to the video encoding method as described in any one of claims 27 to 32.

35. A construction apparatus for a multiple reference line intra prediction (MRL_IP) mode candidate list, comprising a processor and a memory storing a computer program, wherein the processor, when executing the computer program, is able to implement the construction method for an MRL_IP mode candidate list as described in any one of claims 1 to 21.

36. A video decoding apparatus, comprising a processor and a memory storing a computer program, wherein the processor, when executing the computer program, is able to implement the video decoding method according to any one of claims 22 to 26.

37. A video encoding apparatus, comprising a processor and a memory storing a computer program, wherein the processor, when executing the computer program, is able to implement the video encoding method according to any one of claims 27 to 32.

38. A video encoding and decoding system, comprising the video encoding apparatus according to claim 37 and the video decoding apparatus according to claim 36.

39. A non-transitory computer-readable storage medium storing a computer program, wherein the computer program, when executed by a processor, is able to implement the construction method for a multiple reference line intra prediction (MRL_IP) mode candidate list according to any one of claims 1 to 21, or implement the video decoding method according to any one of claims 22 to 26, or implement the video encoding method according to any one of claims 27 to 32.

FIG. 1A

FIG. 1B

FIG. 1C

FIG. 2

AL          A   AR

L

BL

FIG. 3

FIG. 4

FIG. 5

110

CONSTRUCTED AN MRL_IP MODE CANDIDATE LIST FOR A CURRENT BLOCK, WHERE THE CANDIDATE LIST IS FILLED WITH COMBINATIONS OF CANDIDATE EXTENDED REFERENCE LINES AND CANDIDATE INTRA PREDICTION MODES FOR THE CURRENT BLOCK

120

SELECT A COMBINATION OF A REFERENCE LINE AND AN INTRA PREDICTION MODE FOR THE CURRENT BLOCK FOR INTRA PREDICTION BY MEANS OF RATE-DISTORTION OPTIMIZATION

130

IN THE CASE WHERE AN ENCODING CONDITION FOR A MRL_IP MODE FOR THE CURRENT BLOCK IS SATISFIED, ENCODE AN MRL_IP MODE FLAG FOR THE CURRENT BLOCK TO INDICATE THAT THE CURRENT BLOCK USES THE MRL_IP MODE, AND ENCODE AN MRL_IP MODE INDEX FOR THE CURRENT BLOCK TO INDICATE THE POSITION OF THE SELECTED COMBINATION IN THE CANDIDATE LIST

FIG. 6

OBTAIN N×M COMBINATIONS OF EXTENDED REFERENCE LINES AND INTRA PREDICTION MODES ACCORDING TO N EXTENDED REFERENCE LINES AND M INTRA PREDICTION MODES FOR THE CURRENT BLOCK

210

PERFORM PREDICTION ON A TEMPLATE REGION FOR THE CURRENT BLOCK ACCORDING TO EACH OF THE N×M COMBINATIONS, AND CALCULATE ERRORS BETWEEN A RECONSTRUCTED VALUE OF THE TEMPLATE REGION AND PREDICTED VALUES OBTAINED BY PREDICTION

220

FILL K COMBINATIONS CORRESPONDING TO THE ERRORS INTO A TMRL_IP MODE CANDIDATE LIST FOR THE CURRENT BLOCK IN ASCENDING ORDER OF THE ERRORS

230

FIG. 7

FIG. 8A

Current

block

49

47

45

43

42

40

40

42

43

45

47

49

FIG. 8B

310

DECODE AN MRL_IP MODE FLAG FOR THE CURRENT BLOCK, SO AS TO DETERMINE WHETHER AN MRL_IP MODE IS USED FOR THE CURRENT BLOCK

320

WHEN IT IS DETERMINED THAT THE MRL_IP MODE IS USED FOR THE CURRENT BLOCK, FURTHER DECODE AN MRL_IP MODE INDEX FOR THE CURRENT BLOCK, AND CONSTRUCT AN MRL_IP MODE CANDIDATE LIST FOR THE CURRENT BLOCK

330

DETERMINE A COMBINATION OF AN EXTENDED REFERENCE LINE AND AN INTRA PREDICTION MODE SELECTED FOR THE CURRENT BLOCK ACCORDING TO THE CANDIDATE LIST AND THE MRL_IP MODE INDEX, AND PREDICT THE CURRENT PICTURE ACCORDING TO THE SELECTED COMBINATION

FIG. 9

71

PROCESSOR

73

MEMORY

FIG. 10

# INTERNATIONAL SEARCH REPORT

International application No.

**PCT/CN2022/119139**

### A. CLASSIFICATION OF SUBJECT MATTER

H04N19/105(2014.01)i;H04N19/11(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; WPABSC; ENTXTC; DWPI; VEN; WOTXT; USTXT; ENTXT; CNKI; IEEE; JVET: 参考线, 参考行, 模板, 模式, 预测, 帧内, line, MRL, reference, template, TIMD, encoding, matching, list, coding

### C. DOCUMENTS CONSIDERED TO BE RELEVANT

| Category* | Citation of document, with indication, where appropriate, of the relevant passages | Relevant to claim No. |
|---|---|---|
| Y | EP 3443746 A1 (ARRIS ENTERPRISES LLC.) 20 February 2019 (2019-02-20) description, paragraphs 10-116 | 1-39 |
| A | CN 111654696 A (PEKING UNIVERSITY) 11 September 2020 (2020-09-11) entire document | 1-39 |
| A | CN 111955007 A (TENCENT AMERICA LLC) 17 November 2020 (2020-11-17) entire document | 1-39 |
| A | US 2017353730 A1 (MEDIATEK INC.) 07 December 2017 (2017-12-07) entire document | 1-39 |
| PX | XU, Luhang et al. "Non-EE2: Template-based Multiple Reference Line Intra Prediction" *Joint Video Experts Team (JVET) of ITU-T SG 16 WP 3 and ISO/IEC JTC 1/SC 29 27th Meeting, by teleconference, 13–22 July 2022, JVET-AA0120-v1,* 07 July 2022 (2022-07-07), text, section 2 | 1-39 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 March 2023** | **06 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/119139** |

**C.      DOCUMENTS CONSIDERED TO BE RELEVANT**

| Category* | Citation of document, with indication, where appropriate, of the relevant passages | Relevant to claim No. |
| --- | --- | --- |
| Y | WANG, Yang et al. "EE2-related: Template-based Intra Mode Derivation Using MPMs" *Joint Video Experts Team (JVET) of ITU-T SG 16 WP 3 and ISO/IEC JTC 1/SC 29 22nd Meeting, by teleconference, 20–28 April 2021, JVET-V0098,* 14 April 2021 (2021-04-14), abstract, and text, sections 1 and 2 | 1-39 |

Form PCT/ISA/210 (second sheet) (July 2022)

### INTERNATIONAL SEARCH REPORT
**Information on patent family members**

International application No.

**PCT/CN2022/119139**

| Patent document cited in search report | | | Publication date (day/month/year) | Patent family member(s) | | | Publication date (day/month/year) |
|---|---|---|---|---|---|---|---|
| EP | 3443746 | A1 | 20 February 2019 | EP | 3443746 | B1 | 21 July 2021 |
| CN | 111654696 | A | 11 September 2020 | None | | | |
| CN | 111955007 | A | 17 November 2020 | WO | 2019194950 | A2 | 10 October 2019 |
| | | | | WO | 2019194950 | A3 | 30 April 2020 |
| | | | | KR | 20220162871 | A | 08 December 2022 |
| | | | | EP | 3756345 | A2 | 30 December 2020 |
| | | | | EP | 3756345 | A4 | 30 June 2021 |
| | | | | JP | 2022095944 | A | 28 June 2022 |
| | | | | JP | 2021518078 | A | 29 July 2021 |
| | | | | JP | 7062788 | B2 | 06 May 2022 |
| | | | | US | 2021152820 | A1 | 20 May 2021 |
| | | | | US | 11363261 | B2 | 14 June 2022 |
| | | | | US | 2022272331 | A1 | 25 August 2022 |
| | | | | US | 10419754 | B1 | 17 September 2019 |
| | | | | US | 2019306498 | A1 | 03 October 2019 |
| | | | | US | 2019364273 | A1 | 28 November 2019 |
| | | | | US | 10939101 | B2 | 02 March 2021 |
| | | | | KR | 20200128138 | A | 11 November 2020 |
| | | | | KR | 102471979 | B1 | 29 November 2022 |
| US | 2017353730 | A1 | 07 December 2017 | TW | 201804805 | A | 01 February 2018 |
| | | | | TWI | 635743 | B | 11 September 2018 |
| | | | | US | 10230961 | B2 | 12 March 2019 |

Form PCT/ISA/210 (patent family annex) (July 2022)

**REFERENCES CITED IN THE DESCRIPTION**

**Patent documents cited in the description**

• CN 2022103946 W